(19) Europäisches Patentamt / European Patent Office / Office européen des brevets

(11) **EP 4 252 460 B1**

(12) **EUROPEAN PATENT SPECIFICATION**

(45) Date of publication and mention
of the grant of the patent:
**08.07.2026 Bulletin 2026/28**

(21) Application number: **21915762.5**

(22) Date of filing: **28.12.2021**

(51) International Patent Classification (IPC):
*H04W 52/02* $^{(2009.01)}$     *H04W 68/00* $^{(2009.01)}$
*H04W 76/28* $^{(2018.01)}$     *H04W 76/40* $^{(2018.01)}$
*H04W 4/06* $^{(2009.01)}$

(52) Cooperative Patent Classification (CPC):
**H04W 76/28; H04W 52/0229; H04W 76/40;**
H04L 5/001; H04W 4/06; H04W 52/0216;
H04W 68/005; H04W 76/27; Y02D 30/70

(86) International application number:
**PCT/KR2021/020038**

(87) International publication number:
**WO 2022/145964 (07.07.2022 Gazette 2022/27)**

(54) **METHODS AND SYSTEMS FOR MANAGING DRX AND WUS OPERATIONS FOR RECEIVING MBS SERVICES**

VERFAHREN UND SYSTEME ZUR VERWALTUNG VON DRX- UND WUS-OPERATIONEN ZUM EMPFANG VON MBS-DIENSTEN

PROCÉDÉS ET SYSTÈMES DE GESTION D'OPÉRATIONS DE DRX ET DE WUS POUR RECEVOIR DES SERVICES MBS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2020 IN 202041056768**
**13.12.2021 IN 202041056768**

(43) Date of publication of application:
**04.10.2023 Bulletin 2023/40**

(73) Proprietor: **Samsung Electronics Co., Ltd.**
**Suwon-si, Gyeonggi-do 16677 (KR)**

(72) Inventors:
• **SHRIVASTAVA, Vinay Kumar**
**Suwon-si, Gyeonggi-do, 16677 (KR)**
• **SHARMA, Diwakar**
**Suwon-si, Gyeonggi-do, 16677 (KR)**
• **BAEK, Sangkyu**
**Suwon-si, Gyeonggi-do, 16677 (KR)**

(74) Representative: **Gulde & Partner**
**Patent- und Rechtsanwaltskanzlei mbB**
**Berliner Freiheit 2**
**10785 Berlin (DE)**

(56) References cited:
**WO-A1-2020/200075     WO-A1-2020/226397**
**US-A1- 2016 211 980     US-A1- 2020 008 097**
**US-A1- 2020 275 375**

• **OPPO: "Discussion on group-based scheduling for MBS", vol. RAN WG2, no. electronic; 20201102 - 20201113, 23 October 2020 (2020-10-23), XP051941953, Retrieved from the Internet <URL:https://ftp.3gpp.org/tsg_ran/ WG2_RL2/TSGR2_112-e/Docs/R2-2008874.zip R2-2008874-Discussion on group based scheduling for MBS.doc> [retrieved on 20201023]**

- CATT, CBN: "Discussion on basic functions for broadcast/multicast for RRC_IDLE/ RRC_INACTIVE UEs", 3GPP DRAFT; R1-2007837, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting, 24 October 2020 (2020-10-24), Mobile Competence Centre ; 650, route des Lucioles ; F-06921 Sophia-Antipolis Cedex ; France , XP051946518

**Description**

**[Technical Field]**

The present disclosure relates to the field of wireless networks and more particularly to managing Discontinuous Reception (DRX) and Wake UP Signal (WUS) operations for reception of Multicast Broadcast Service (MBS) services with reduced power consumption.

**[Background Art]**

To meet the demand for wireless data traffic having increased since deployment of 4th generation (4G) communication systems, efforts have been made to develop an improved 5th generation (5G) or pre-5G communication system. Therefore, the 5G or pre-5G communication system is also called a 'Beyond 4G Network' or a 'Post LTE System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid FSK and QAM Modulation (FQAM) and sliding window superposition coding (SWSC) as an advanced coding modulation (ACM), and filter bank multi carrier(FBMC), non-orthogonal multiple access(NOMA), and sparse code multiple access (SCMA) as an advanced access technology have been developed.

5G New Radio (NR) is targeting support for Multicast Broadcast Service (MBS) services, as defined in a release 17 version of 3rd Generation Partnership Project (3GPP) specification. In legacy systems, Multimedia Broadcast Multicast Services (MBMS) services may be supported by a Long Term Evolution (LTE) 4G network. However, an architecture and requirements of the MBS services may vary different from the MBMS services.

Specifically, multicast services in the MBS services refer to services being transmitted and availed by a set of User Equipments (UEs) registered to a group service (for example, a Mission Critical Push-To-Talk (MCPTT) service). Broadcast services in the MBS services refer to services being transmitted and available to all the UEs in a specific coverage area, wherein broadcast is performed and typically, the UE may need not to be registered. Therefore, effectively, both the multicast and broadcast services are Point-To-Multipoint (PTM) services, as there is one transmitter and multiple recipient of contents. It may also be possible to provide the multicast and broadcast services/MBS services in a Point-To-Point (PTP) manner, wherein there may be multiple PTP connections to share the MBS services with multiple recipients. Apart from the multicast and broadcast services in the MBS services, there are another category of services referred as unicast services, which may be meant for one recipient only. The unicast services require one to one dedicated connection between a transmitter and a receiver.

The MBS services may be carried in a PTM bearer, a PTP bearer, or a combination of the PTM bearer and the PTP bearer. The combination of the PTM bearer and the PTP bearer may provide a lot of features with respect to increased reliability of reception of MBS service packets, efficient switching between two modes of reception (i.e., switching between the PTM bearer and the PTP bearer when required), and so on. The switching between the two modes of reception may be performed due to at least one of, mobility of the UE, network loading conditions, a user request density for the reception of the MBS services, or the like. The combination of the PTM bearer and the PTP bearer (i.e., a bearer configuration with both legs of PTM and PTP) may be referred as an MBS split bearer.

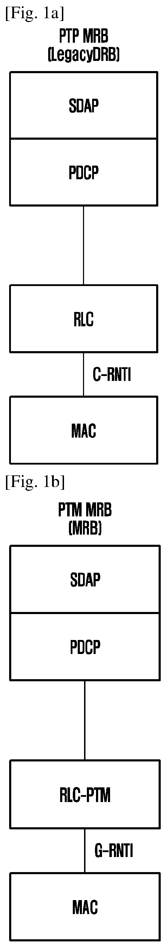

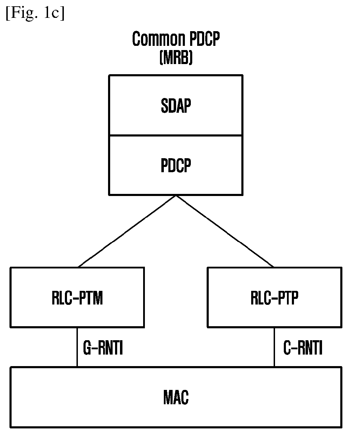

FIGs. 1a-1c depict existing radio bearer architectures for a protocol stack required for the UE to support the reception of the MBS services. The existing radio bearer architectures include a PTP Radio Link Control (RLC) bearer (PTP MRB), a PTM RLC bearer based (PTM MRB), and a PTM+PTP RLC bearer (MBS split bearer). The PTM RLC bearer may be an Unacknowledged Mode (UM) based RLC, which does not support a functionality of Automatic Repeat Request (ARQ) (i.e., no RLC level transmissions are supported as there is no feedback or a status report between a transmitting RLC entity and a sending RLC entity). The PTP RLC bearer may be either the UM based RLC, or an Acknowledged Mode (AM) based RLC. The AM based RLC supports sharing of the status/feedback from the receiver to the transmitter and retransmission of Nacked RLC packets from the transmitter to the receiver. Thereby, there may be a further enhancement in the reliability that may be ensured with the AM based RLC. Effectively, a lossless operation may be achieved utilizing the AM based RLC.

Further, a Packet Data Convergence Protocol (PDCP) of the protocol stack performs reordering operation and employs a reordering timer t-Reordering to ensure that out of order packets received from the RLC (from two RLCs in the MBS split bearer) have been re-arranged in an order of their Sequence Numbers (SNs) before an expiry of the reordering timer t-Recording. In case, if the reordering timer t-Recording expires, and still there may be a gap with a PDCP receive window (i.e., missing a PDCP Protocol Data Unit (PDU) SN, so that the reordering and in-sequence delivery may not be performed to a higher layer), the PDCP moves the PDCP receive window (i.e., updating its state variable RX_DELIV) further and performs the delivery of the PDCP PDUs received until the PDCP receive window's lower edge, RX_DELIV 5 (a gap of missing PDCP PDU may also be delivered).

Further, having the MBS split bearer with both the PTM RLC bearer and the PTP RLC bearer adds to the reliability of an MBS bearer, as a lossless operation has been achieved from a PTP path, wherein a PTM path provides a packet with lesser delay as no retransmission is involved albeit with the possible loss. With combining the PTP and PTM paths through the PDCP reordering operation results in higher chances of receiving the PDCP PDUs before the t-reordering expiry and providing the ordered in-sequence delivery to the higher layer.

3GPP technical document R2-2008874 discloses "Discussion on group-based scheduling for MBS". WO 2020200075 A1 discloses a first-type wake-up signal (WUS) and a second-type WUS.

**[Disclosure of Invention]**

**[Technical Problem]**

The principal object of the embodiments herein is to disclose methods and systems for managing Discontinuous Reception (DRX) operations for reception of Multicast Broadcast Service (MBS) services on a User Equipment (UE) with reduced power consumption.

Another object of the embodiments herein is to disclose methods and systems for aligning a paging occasion (PO) of paging reception to match awake periods of a paging Discontinuous (DRX) cycle with awake periods of a DRX configuration intended for reception of the MBS services, if the UE is in an idle mode or an inactive mode and managing a DRX cycle based on the aligned PO to receive the MBS services.

Another object of the embodiments herein is to disclose methods and systems for receiving a Wake-Up Signal (WUS) from a network indicating a presence or absence of allocations for the UE to receive the MBS services in at least one MBS service DRX cycle, if the UE is in a connected mode and managing the DRX cycle based on the received WUS to receive the MBS services.

**[Solution to Problem]**

The present invention is defined by the appended set of claims.

**[Advantageous Effects of Invention]**

According to the disclosure, there is improvements in and relating to managing discontinuous reception (DRX) and wake up signal (WUS) operations for receiving multicast broadcast service (MBS) services.

**[Brief Description of Drawings]**

Embodiments herein are illustrated in the accompanying drawings, throughout which like reference letters indicate corresponding parts in the various figures. The embodiments herein will be better understood from the following description with reference to the drawings, in which:

FIG. 1a depicts existing Multicast Broadcast Service (MBS) radio bearer architectures for a protocol stack required for a User Equipment (UE) to support a reception of MBS services;
FIG. 1b depicts existing Multicast Broadcast Service (MBS) radio bearer architectures for a protocol stack required for a User Equipment (UE) to support a reception of MBS services;
FIG. 1c depicts existing Multicast Broadcast Service (MBS) radio bearer architectures for a protocol stack required for a User Equipment (UE) to support a reception of MBS services;
FIG. 2 is an MBS communication system, according to embodiments as disclosed herein;
FIG. 3a depicts a plurality of configuration modes or alternatives for an MBS Bandwidth Part (BWP) and/or a common frequency resource (CFR), according to embodiments as disclosed herein;
FIG. 3b depicts a plurality of configuration modes or alternatives for an MBS Bandwidth Part (BWP) and/or a common frequency resource (CFR), according to embodiments as disclosed herein;
FIG. 3c depicts a plurality of configuration modes or alternatives for an MBS Bandwidth Part (BWP) and/or a common frequency resource (CFR), according to embodiments as disclosed herein;

FIG. 3d depicts a plurality of configuration modes or alternatives for an MBS Bandwidth Part (BWP) and/or a common frequency resource (CFR), according to embodiments as disclosed herein;

FIG. 3e depicts a plurality of configuration modes or alternatives for an MBS Bandwidth Part (BWP) and/or a common frequency resource (CFR), according to embodiments as disclosed herein;

FIG. 3f depicts a plurality of configuration modes or alternatives for an MBS Bandwidth Part (BWP) and/or a common frequency resource (CFR), according to embodiments as disclosed herein;

FIG. 3g depicts a plurality of configuration modes or alternatives for an MBS Bandwidth Part (BWP) and/or a common frequency resource (CFR), according to embodiments as disclosed herein;

FIG. 3h depicts a plurality of configuration modes or alternatives for an MBS Bandwidth Part (BWP) and/or a common frequency resource (CFR), according to embodiments as disclosed herein;

FIG. 4 is an example block diagram depicting components of a UE for receiving the MBS services with reduced power consumption, according to embodiments as disclosed herein;

FIG. 5 is an example block diagram depicting components of a network/Base Station (BS)/gNodeB (gNB) in the MBS communication system, according to embodiments as disclosed herein;

FIG. 6 is a flowchart depicting a method for managing Discontinuous Reception (DRX) operations for receiving the MBS services on the UE, according to embodiments as disclosed herein;

FIG. 7 is a flowchart depicting a method for aligning a paging occasion (PO) based on a Global Unique Temporary Identifier (GUTI) reassignment procedure;

FIG. 8 is a flowchart depicting a method for aligning the PO based on MBS assistance information/MBS scheduling information;

FIG. 9 is a flowchart depicting a method for aligning the PO based on an offset/offset value;

FIG. 10 is a flowchart depicting a method for managing a DRX cycle based on a Wake Up Signal (WUS) received from a network to receive the MBS services, according to embodiments as disclosed herein;

FIG. 11 is a flowchart depicting another method for managing the DRX cycle based on the WUS received from the network to receive the MBS services, according to embodiments as disclosed herein;

FIG. 12 is a flowchart depicting another method for managing the DRX cycle based on the WUS received from the network to receive the MBS services, according to embodiments as disclosed herein;

FIG. 13 is a flowchart depicting another method for managing the DRX cycle based on the WUS received from the network to receive the MBS services, according to embodiments as disclosed herein;

FIG. 14 is a flowchart depicting a method for managing performing of MBS measurements on the unicast BWP, according to embodiments as disclosed herein;

FIG. 15 is a flowchart depicting a method for managing performing of the MBS measurements on the MBS BWP/CFR, if the UE is configured to monitor Downlink Control Information (DCI) format for receiving the WUS, according to embodiments as disclosed herein;

FIG. 16 is a flowchart depicting a method for managing performing of the MBS measurements on the MBS BWP/CFR, if the UE is configured with a unicast DRX configuration, according to embodiments as disclosed herein;

FIG. 17 is a flowchart depicting a method for managing performing of the MBS measurements on the MBS BWP/CFR, if the UE is configured with an MBS service DRX configuration and the unicast DRX configuration, according to embodiments as disclosed herein; and

FIG. 18 is a flowchart depicting another method for managing performing of the MBS measurements on the MBS BWP/CFR, if the UE is configured to monitor the DCI format for receiving the WUS, according to embodiments as disclosed herein.

**[Mode for the Invention]**

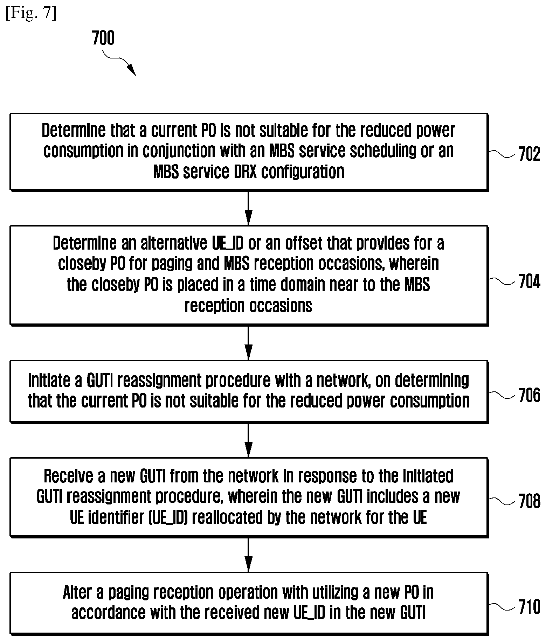

The examples disclosed in figures 7-9 and corresponding parts of the description do not fall under the scope of protection of the claims, but they are useful additional information for understanding the invention.

The example embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The description herein is intended merely to facilitate an understanding of ways in which the example embodiments herein can be practiced and to further enable those of skill in the art to practice the example embodiments herein. Accordingly, this disclosure should not be construed as limiting the scope of the example embodiments herein.

Embodiments herein disclose methods and systems for managing Discontinuous Reception (DRX) and Wake Up Signal (WUS) operations for reception of Multicast Broadcast Service (MBS) services on a User Equipment (UE) in a wireless network/communication system, wherein a plurality of configuration modes or alternatives for an MBS Bandwidth Part (BWP) and/or Common Frequency Resources (CFR) are disclosed.

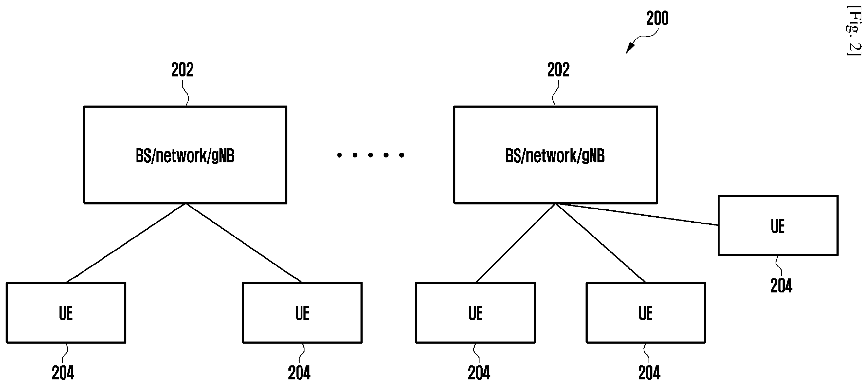

Referring now to the drawings, and more particularly to FIGS. 2 through 18, where similar reference characters denote corresponding features consistently throughout the figures, there are shown example embodiments.

FIG. 2 is a Multicast Broadcast Service (MBS) communication system 200, according to embodiments as disclosed herein. The MBS communication system 200 referred herein may be configured to provide MBS services to a plurality of recipients. In an embodiment, the MBS service may be carried in at least one of, a point-to-multipoint (PTM) Radio Link Control (RLC) bearer (i.e., a PTM MBS Radio Bearer (MRB)), a point-to-point (PTP) RLC bearer (i.e., a PTP MRB), and a combination of the PTM RLC bearer and the PTP RLC bearer (i.e., an MBS split bearer). The MBS services may include PTM services, PTP services, and a combination of the PTM and PTP services. The PTM services may be one of, broadcast services, and multicast services. The PTP services may be unicast services. The above-described types/forms of the MBS services may be intuitively inferred by one of ordinary skill in the art by referring to the 3GPP specification, and thus, its detailed description is omitted.

Examples of the MBS services may be, but are not limited to, a streaming service (streaming of multimedia data such as audio, video, text and so on), a file download service, a carousel service (combining file download service and streaming service), a television (TV) service, and so on. The MBS services may be used to support a wide variety of applications such as, but are not limited to, public safety and mission critical applications, Vehicle to Everything (V2X) applications, Internet Protocol (IP)v4/IPv6 multicast delivery applications, Internet Protocol television (IPTV) software delivery applications, group communication related applications, Internet of Things (IoT) applications or any other applications which have different Quality of Service (QoS) requirements and categorized as critical and non-critical services.

The MBS communication system 200 includes a plurality of Base Stations 202, and a plurality of User Equipments (UEs) 204.

The BS(s)/network 202 may be a radio node configured to communicate with the one or more UEs 204. The BS 202 may communicate with the one or more UEs 204 via a same or different Radio Access Technologies (RATs). Examples of the RATs may be, but are not limited to, a Third Generation Partnership 3rd Generation Partnership Project (3GPP) Long Term Evolution (LTE/4G), an LTE-Advanced (LTE-A), a Fifth Generation (5G) New Radio, a 6G wireless system, a Wireless Local Area Network (WLAN), a Worldwide Interoperability for Microwave Access (WiMAX/ IEEE 802.16), a Wi-Fi (IEEE 802.11), an Evolved-UTRA (E-UTRA), or any other next generation network. The BS 202 provides at least one cell to the UE 204, wherein the at least one cell indicates a geographical area in which services (the MBS services herein) may be offered to the UE 204. The BS 202 may be at least one of, a macro-BS, a micro-BS, a femto-BS, a pico-BS, and so on. Embodiments herein use the terms such as "BSs", "network" "cells", "macro-BSs", "pico-BSs", "eNodeBs (eNBs)", "gNBs", and so on, interchangeably to refer to a Base Transceiver System (BTS)/station that communicates with the one or more UEs 204.

The BS 202 may be configured to serve the one or more UEs 204 with the MBS services, which have been received from an MBS gateway/server (not shown). The BS 202 may be hereinafter referred as the network 202 throughout the document.

The UE(s) 204 referred herein may be a user device supporting reception of the MBS services. Examples of the UE 204 may be, but are not limited to, a mobile phone, a smartphone, a tablet, a phablet, a personal digital assistant (PDA), a laptop, a computer, a wearable computing device, a vehicle infotainment device, an IoT device, a Wireless Fidelity (Wi-Fi) router, a Universal Serial Bus (USB) dongle, a television, a vehicle with communication facility (for example, a connected car), or any other processing device supporting the MBS services.

The UE 204 may operate in various modes such as, but are not limited to, an idle mode, an inactive mode, a connected mode, or the like. Each mode of the UE 204 may be intuitively inferred by one of ordinary skill in the art by referring to the 3GPP specification, and thus, its detailed description is omitted.

In an embodiment, the UE 204 may support the reception of the unicast services and the MBS services simultaneously on a unicast Bandwidth Part (BWP) and an MBS BWP or a Common Frequency Resource (CFR) (MBS BWP/CFR), based on the current mode of the UE 204. The MBS BWP/CFR may be associated with the unicast BWP. For example, the MBS BWP/CFR may be confined fully within the unicast BWP. For another example, the MBS BWP/CFR may be partially overlapped with the unicast BWP. For another example, the MBS BWP/CFR may be separately spaced than that of the unicast BWP.

In an embodiment, the UE 204 may receive the unicast services and/or the MBS services based on a plurality of configuration modes or alternatives provided for the MBS BWP/CFR. Exemplary configuration modes have been described below:

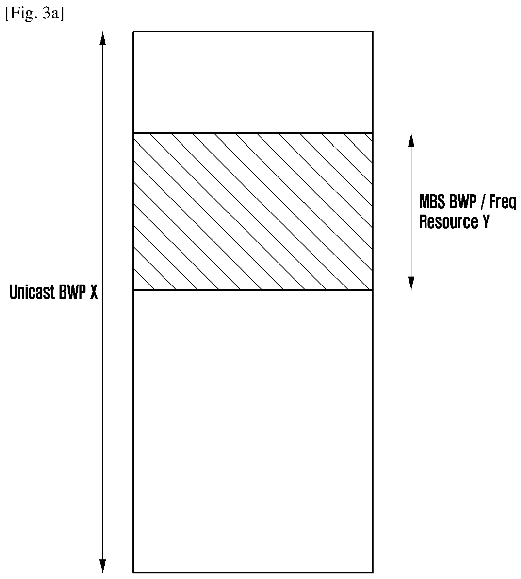

-    a configuration mode 1/case 1 (depicted in FIG. 3a): In the configuration mode 1, the MBS BWP/CFR 'Y' may be fully confined within the unicast BWP 'X', such that 'X'>'Y'. In such a configuration mode, there is no need for the UE 204 to perform switching between the unicast BWP and the MBS BWP/CFR to receive the unicast services and/or the MBS services. Thereby resulting in zero delay (otherwise, the BWP switching may be incurred a delay). Further, in the configuration mode 1, the UE 204 receives the unicast services and the MBS services together. The MBS BWP/CFR may be statically or dynamically allocated;

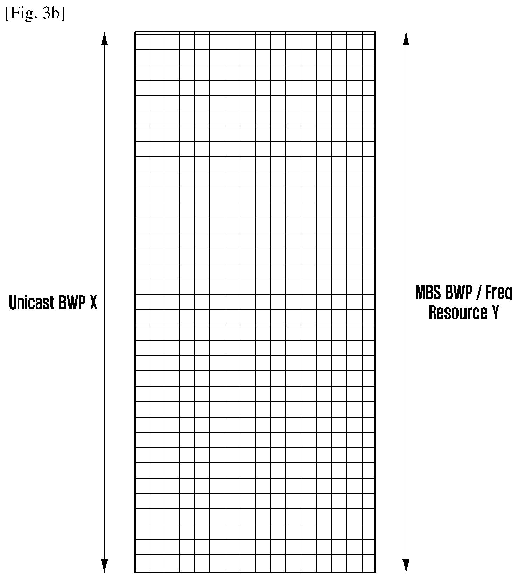

- a configuration mode 2/case 2 (depicted in FIG. 3b): In the configuration mode 2, the MBS BWP/CFR 'Y' may be confined within the unicast BWP 'X', such that X=Y. In the configuration mode 2, there is no need for the UE 204 to perform switching between the unicast BWP and the MBS BWP/CFR to receive the unicast services and/or the MBS services. Thereby resulting in zero delay;

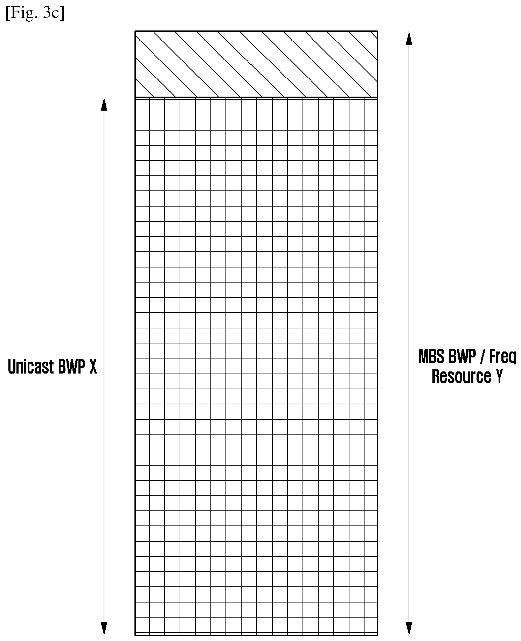

- a configuration mode 3/case 3 (depicted in FIG. 3c): In the configuration mode 3, the MBS BWP/CFR 'Y' may extend beyond the unicast BWP 'X', such that X<Y. In an example, in the configuration mode 3, the UE 204 may receive the unicast services and the MBS services together by dynamically switching between the MBS BWP/CFR and the unicast BWP. In another example, in the configuration mode 3, the UE 204 may receive the unicast services and the MBS services together by utilizing two different paths. In another example, in the configuration mode 3, the UE 204 may receive the unicast services and the MBS services together by utilizing carrier aggregation;

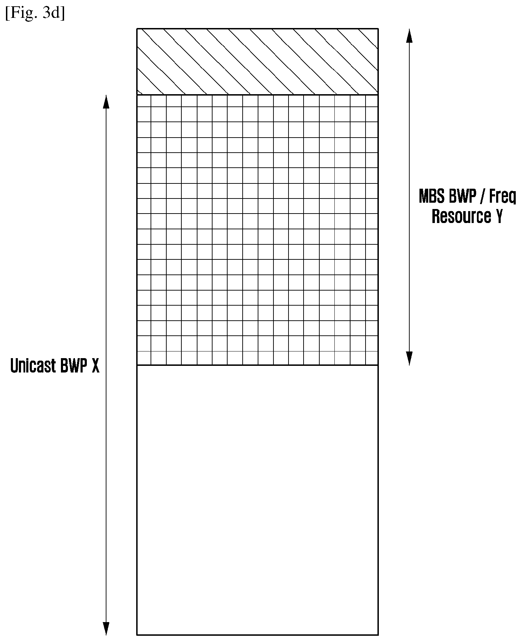

- a configuration mode 4/case 4 (depicted in FIG. 3d): In the configuration mode 4, the MBS BWP/CFR 'Y' may not be completely confined within the unicast BWP 'X'. Thus, there may a start offset for the MBS BWP/CFR with respect to the unicast BWP. However, in the configuration mode 4, all the three cases for X>Y, X=Y, and X<Y may be possible. In the configuration mode 4, the UE 204 may receive the unicast services and the MBS services together by dynamically switching between the MBS BWP/CFR and the unicast BWP or by utilizing the two different reception paths or by utilizing the carrier aggregation;

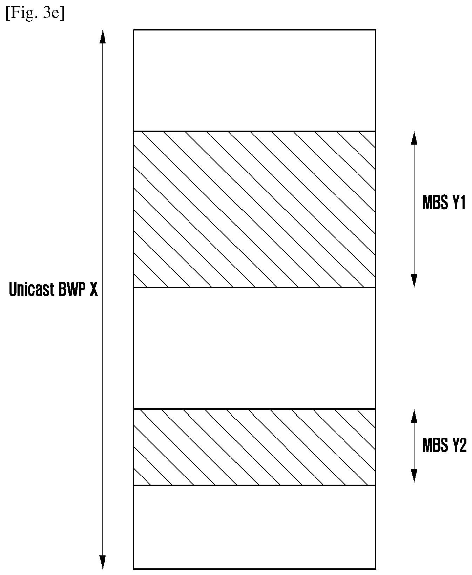

- a configuration mode 5/case 5 (depicted in FIG. 3e): In the configuration mode 5, MBS Bandwidth Parts (BWPs) or Common Frequency Resources (CFRs) 'Y1', 'Y2', 'Y3' ...'Yn' may be confined within the unicast BWP 'X', such that X>Y1, X>Y2...X>Yn. In the configuration mode 5, there is no need for the UE 204 to perform switching between the unicast BWP and the MBS BWPs/CFRs to receive the unicast services and/or the MBS services. Thereby resulting in zero delay. Further, in the configuration mode 5, the UE 204 receives the unicast services and the MBS services together. The MBS BWPs/CFRs Y1, Y2, ...Yn may be statically or dynamically allocated;

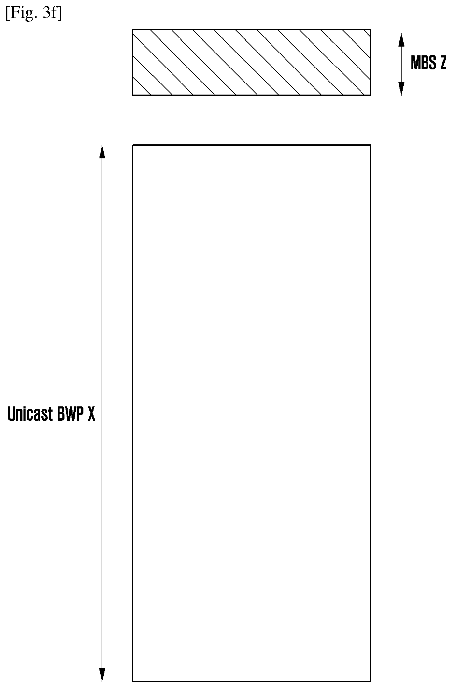

- a configuration mode 6/case 6 (depicted in FIG. 3f): In the configuration mode 6, the MBS BWP/CFR 'Z' is completely different from the unicast BWP 'X'. Therefore, there is the BWP switching involved. In the configuration mode 6, the UE 204 may receive the unicast services and the MBS services together provided by dynamically switching between the MBS BWP/CFR and the unicast BWP or by utilizing the two different reception paths or by utilizing the carrier aggregation;

- a configuration mode 7/case 7: In the configuration mode 7, a static MBS configuration in case 1, 3, and 5 within the BWP may restrict flexibility scheduling of MBS and unicast resources. Therefore, dynamic/semi-static MBS frequency allocation may be performed within the BWP. Alternatively, a dynamic or semi-static "sub-BWP (MBS)" configuration may be activated. In an example, a Radio Resource Control (RRC) signalling and a Medium Access Control (MAC)-Control Element (CE) (MAC-CE), physical downlink control channel (PDCCH) indication, or the like may be used to activate or de-activate the configuration of the dynamic or semi-static "sub-BWP (MBS)"; and

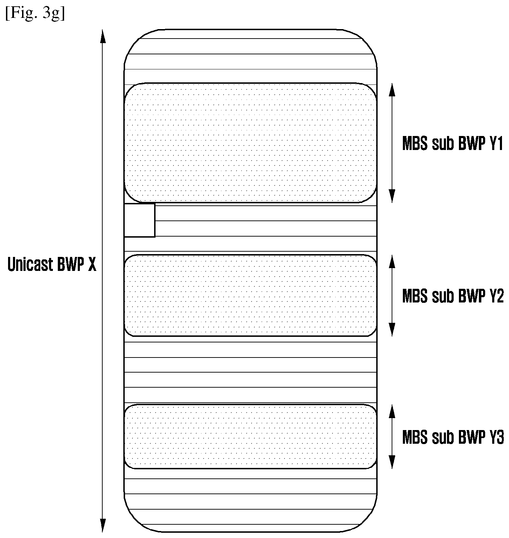

- a configuration mode 7.1/case 7.1 (depicted in FIG. 3g): In the configuration mode 7.1, the dynamic or semi-static configuration with a change in "sub-BWP" within the BWP may also add flexibility in managing resources as per a channel condition and a geographical area to minimize interferences in the MBS resources; and

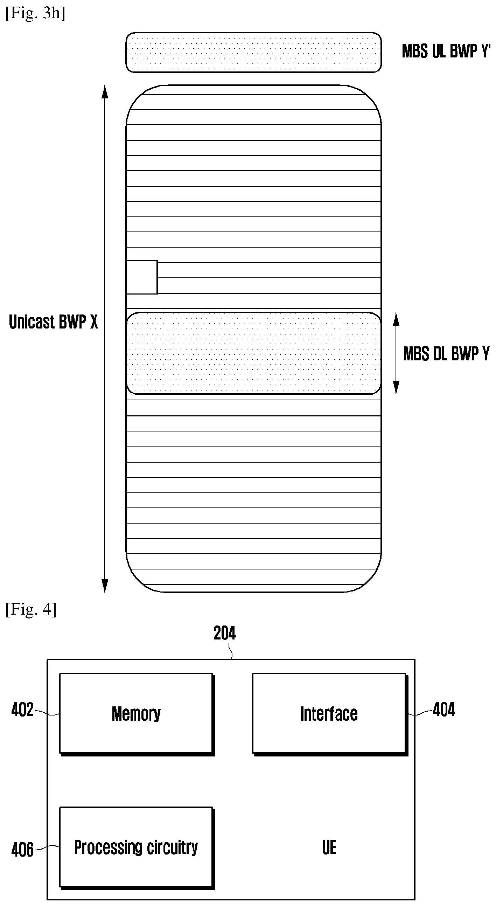

- a configuration mode 8/case 8 (depicted in FIG 3h): In the configuration mode 8, an MBS uplink (UL) BWP Y' is shown along with the MBS downlink (DL) BWP Y. In an example, the MBS UL BWP Y' may be located outside a unicast DL BWP.

The UE 204 may be configured to receive the MBS services based on Discontinuous Reception (DRX) configurations received from the network 202. The DRX configurations depict a DRX cycle for the UE 204, which depicts an ON duration (to wake up) and an OFF duration (to enter into a sleep state) for the UE 204 for receiving the one or more MBS services. The DRX configurations provide flexibility for the network 202 to schedule the MBS services/sessions during any Transmission Time Interval (TTI) or a slot within an ON duration of the corresponding DRX cycle. In an embodiment, the UE 204 may receive the DRX configuration(s) from the network 202 to receive the MBS services during a PTP delivery mode, a PTM delivery mode and a combination of a PTP delivery mode and a PTM delivery mode. The DRX configuration for receiving the MBS services during the PTP delivery mode may be based on a unicast DRX configuration. The DRX configuration for receiving the MBS services during the PTM delivery mode may be based on an MBS service DRX configuration.

Embodiments herein enable the UE 204 to manage the DRX cycle/DRX operations for receiving the MBS services with a reduced power consumption.

For receiving the MBS services, the UE 204 performs at least one operation, based on the current mode of the UE 204. If the UE 204 is in a first mode (i.e., the idle mode or the inactive mode), the UE 204 aligns a Paging Occasion (PO) of paging reception to match awake periods of a paging DRX cycle with awake periods of a DRX configuration intended for the reception of the MBS services. The UE 204 manages the DRX cycle using the PO alignment to receive the MBS services.

When the UE 204 is the first mode (the idle mode or the inactive mode), the UE 204 has to perform certain idle/inactive mode operations like the paging reception or measurements which are in generic periodic in nature. The idle/inactive mode operations may be linked to a paging cycle during which the UE 204 awakes at a start of the paging cycle and checks for any paging reception possibility and then optionally performs serving/neighbor cell measurements and enters to a sleep state. However, the MBS services which the UE 204 is receiving may have its own DRX parameters and may require the UE 204 to be awake at certain times. Being multicast/broadcasted, timing for which the UE 204 has to be awake may not be UE specific and each UE 204 has to fulfill such timings requirements. As a result, the UE 204 incurs heavy power consumption due to its own paging/measurement operations linked to paging occasions, and MBS service reception. Thus, the embodiments herein enable the UE 204 to match the awake periods during paging/measurements with the awake periods intended for the reception of the MBS services.

In an embodiment, the UE 204 may align the PO based on at least one of, a Global Unique Temporary Identifier (GUTI) request for receiving a new GUTI, an alternative UE identifier (UE_ID), scheduling information for the reception of the MBS services or the MBS service information like a Group-Radio Network Temporary Identifier (G-RNTI)/Group Configured Scheduled Radio Network Temporary Identifier (G-CS-RNTI)/Temporary Mobile Group Identity (TMGI) or preferred PO, an offset information to an existing PO to avail paging at new shifted occasion.

In the idle/inactive mode, the UE 204 calculates the PO and a Paging Frame (PF) based on a UE_ID and a number of total paging frames in the DRX cycle of the UE 204 ('N'). In an example, the UE ID may include a 5G-S-TMSI (Temporary Mobile Subscriber Identity) mod 1024. Based on the PO and the PF, the UE 204 monitors the PDCCH to read paging Downlink Control Information (DCI) (for example, DCI format 1_0 with CRC scrambled by Paging-RNTI (P-RNTI) and reads the paging message. The UE 204 decides if the paging message is intended it only after reading the paging message. All other UEs discard the paging message as a false alarm. Thus, a group of UEs (paging group) reads the PDCCH and further the paging message based on the respective UE_ID and 'N' on the same PO and the PF. The PF and the PO for the paging may be determined as follows:

the UE 204 determines a System Frame Number (SFN) as:

$$(SFN + PF\_offset) \bmod T = (T \operatorname{div} N)*(UE\_ID \bmod N) \ 15$$

on determining the SFN, the UE 204 determines an index (i s) indicating an index of the PO as:

$$i\_s = floor\ (UE\_ID/N) \bmod Ns$$

the UE 204 uses following parameters for calculating the PF and the i_s:

T: DRX cycle of the UE 204;
N: a number of total paging frames in T;
Ns: number of paging occasions for the PF; and
PF_offset: an offset used for calculating the PF
UE_ID: 5G-S_TMSI mod 1024

In order to align the PO based on the GUTI/alternative UE_ID/offset, the UE 204 determines that the current PO is not suitable for the reduced power consumption in conjunction with the MBS service scheduling or the MBS service DRX configuration (for example, such instances are far apart, and the UE 204 has to awake at different instances by consuming more power). The UE 204 then determines the alternative UE_ID or the offset (may also referred as an offset value). The UE 204 determines the alternative UE_ID or the offset while determining the PO and the PF, as discussed in Para [0050], that provides for a closeby PO for paging and MBS reception occasions. The closeby PO may be a PO placed in a time domain near to the MBS reception occasions. Determining the alternative UE_ID or the offset that provides for the closeby PO enables the UE 204 to not to awake multiple times to receive paging and MBS services separately, and thereby, saves power. On determining the alternative UE_ID or the offset after determining that the current paging is not suitable for the reduced power consumption, the UE 204 initiates a GUTI reassignment procedure with the network 202. In an example, the GUTI reassignment procedure includes sending, by the UE 204, a GUTI reassignment request to the network 202 in a Non-Access Stratum (NAS) signaling. In another example, the GUTI reassignment procedure includes sending, by the UE 204, the GUTI reassignment request with the alternative UE_ID to the network 202 in the NAS signaling. In another example, the GUTI reassignment procedure includes sending, by the UE 204, the GUTI reassignment request with the offset to the network in the NAS signaling. In response to the initiated GUTI reassignment procedure, the UE 204 receives a new GUTI from the network 202 in response to the initiated GUTI reassignment procedure. The new GUTI includes a new UE_ID reallocated by the network 202 for the UE 204. In an example, if the alternative UE_ID or the offset is included in the GUTI reassignment request and sent to the network 202, the new UE_ID may be the alternative UE_ID or another suitable UE_ID reallocated by the network based on the alternative UE_ID or the offset. The UE 204 alters a paging reception operation with utilizing a new PO in accordance with the received new UE_ID in the new GUTI.

In order to align the PO based on the scheduling information, the UE 204 sends MBS assistance information to the network 202 in the NAS signaling or a Radio Resource Control (RRC) signaling for at least one of, a preferred PO, the DRX configuration of the MBS services, or scheduling and DRX configuration information for the MBS services. The MBS assistance information includes the MBS service information, or the alternative UE_ID, or the offset, or the like. The MBS service information includes one of, the G-RNTI, the G-CS-RNTI, the TMGI, or the like. In response to the sent MBS assistance information, the UE 204 receives the new PO or the new UE_ID in the NAS signaling or the RRC signalling from the network 202. The new PO or the new UE_ID carries an alignment between a paging DRX (i.e., for paging reception) and an MBS service DRX (i.e., for MBS service reception). That is, the new PO or the new UE_ID for the UE 204 based on the MBS assistance information may bring better alignment between the paging DRX and the MBS service DRX and/or lesser awake time for UE 204 and/or lesser power consumption for the UE 204. The UE 204 alters the paging reception operation with the new PO in accordance with the new UE_ID.

In order to align the PO based on the offset, the UE 204 computes the offset/offset value to the current PO (as discussed in Para [0050]) to make the alignment between the paging DRX and an MBS service DRX. That is, the UE 204 computes and determines the PO and thereby, the needed offset to the existing paging occasion may bring the better alignment between the paging DRX and the MBS service DRX and/or lesser awake time for the UE 204 and/or lesser power consumption for the UE 204. The UE 204 performs a first action, or a second action based on the computed offset/offset value. The first action performed by the UE includes sending the computed offset/offset value to the network 202 in one of, the NAS signaling (for example, a Mobility Request Update message), the RRC signaling (for example, a UE assistance information message), a MAC signaling (for example, a MAC Control Element), receiving the new PO or the new UE_ID, or a paging configuration message from the network, and altering the paging reception operation with the new PO in accordance with the new UE_ID. The second action performed by the UE 204 includes aligning the PO by applying the computed offset/offset value to the current PO.

Once the PO has been aligned, the UE 204 in the idle mode/inactive mode manages the DRX cycle (i.e., the UE 204 turns ON/wakes up) based on the aligned PO to receive the MBS services.

For receiving the MBS services, when the UE 204 is in a second mode (i.e., the connected mode), the UE 204 receives a Wake-Up Signal (WUS) from the network 202 indicating a presence or absence of allocations for the UE 204 to receive the MBS services in at least one MBS service DRX cycle. The UE 204 manages the DRX cycle based on the WUS to receive the MBS services.

In an embodiment (i.e., in a first format), the UE 204 receives the WUS from the network 202 in the DCI at an offset to a DRX ON-duration start indicating the presence or absence of the allocations for the MBS services for the UE 204 on the unicast BWP. The WUS received in the first format indicates the presence or absence of the allocations for the at least one of the MBS services including at least one of, a PTP bearer, a PTM bearer, or a combination of the PTP bearer and the PTM bearer. When the UE 204 receives the WUS from the network 202 in the first format, the UE 204 manages the DRX cycle by waking up in the DRX ON-duration to receive DCI allocations on the PDCCH addressed to at least one of, the G-RNTI, the G-CS-RNTI or a Cell-RNTI (C-RNTI) during the ON-duration, if the presence of the allocations for the MBS services is indicated in the WUS. The UE 204 remains in sleep in the DRX ON-duration or skips monitoring of the DCI allocations on the PDCCH addressed to the at least one of, the G-RNTI, the G-CS-RNTI or the C-RNTI during the DRX ON-duration, if the absence of the allocations for the MBS services indicated in the WUS.

In another embodiment (i.e., in a second format), the UE 204 receives the WUS from the network 202 in the DCI at the offset to the DRX ON-duration start indicating the presence or absence of the allocations for at least one of, the MBS services and the unicast services for the UE 204 on the unicast BWP. When the UE 204 receives the WUS from the network 202 in the second format, the UE 204 manages the DRX cycle by waking up in the DRX ON duration to receive MBS DCI allocations on the PDCCH addressed to at least one of, the G-RNTI, the G-CS-RNTI and the C-RNTI and unicast DCI allocations on the PDCCH addressed to the C-RNTI during the DRX ON-duration, if the presence of the allocations for at least one of, the MBS services and the unicast services is indicated in the WUS. The UE 204 remains in sleep in the DRX ON-duration or skips monitoring of the MBS DCI allocations on the PDCCH addressed to at least one of, the G-RNTI, the G-CS-RNTI, and the C-RNTI, and the unicast DCI allocations on the PDCCH addressed to the C-RNTI during the DRX ON-duration, if the absence of the allocations for at least one of, the MBS services and the unicast services is indicated in the WUS.

In another embodiment (i.e., in a third format), the UE 204 receives the WUS from the network 202 at the DCI at the offset to the DRX ON-duration start indicating the presence or absence of the allocations for the unicast services for the UE 204 on the unicast BWP except for the MBS services being received on the MBS BWP/CFR associated with the unicast BWP. When the UE 204 receives the WUS from the network 202 in the third format, the UE 204 manages the DRX cycle by waking up in the DRX ON-duration to receive the MBS DCI allocations on the PDCCH addressed to at least one of, the G-RNTI, the G-CS-RNTI or the C-RNTI, and the unicast DCI allocations on the PDCCH addressed to the C-RNTI during the DRX ON-duration, if the presence of the allocations for the unicast services on the unicast BWP is indicated in the WUS. The UE 204 continues to monitor the MBS DCI allocations on the PDCCH addressed to at least one of, the G-RNTI, the G-CS-RNTI or the C-RNTI and skips monitoring of the unicast DCI allocations on the PDCCH addressed to the C-RNTI during the DRX ON-duration, if the absence of the allocations for the unicast services on the unicast BWP is indicated in the WUS.

In another embodiment (i.e., in a fourth format), the UE 204 receives the WUS from the network 202 in the DCI at the offset to the DRX ON-duration start indicating the presence or absence of the allocations for at least one of, the unicast services and the MBS services for the UE 204 on the unicast BWP and the MBS services for the UE 204 on the MBS BWP/CFR associated to the unicast BWP. When the UE 204 receives the WUS in the fourth format, the UE 204 manages the DRX cycle by waking up in the DRX ON-duration to receive the MBS DCI allocations on the PDCCH addressed to at least one of, the G-RNTI, the G-CS-RNTI or the C-RNTI on the unicast BWP or the MBS BWP/CFR ad the unicast DCI allocations on the PDCCH addressed to the C-RNTI on the unicast BWP, during the DRX ON-duration, if the presence of the allocations for at least one for the unicast services and at least one of the MBS services on the unicast BWP and for at least one of the MBS services on the MBS BWP/CFR is indicated in the WUS. The UE 204 skips monitoring of the MBS DCI allocations on the PDCCH addressed to at least one of, the G-RNTI, the G-CS-RNTI or the C-RNTI on the unicast BWP or the MBS BWP/CFR and skips monitoring of the unicast DCI allocations on the PDCCH addressed to the C-RNTI on the unicast BWP during the DRX ON-duration, if the absence of the allocations for the unicast services and the MBS services on the unicast BWP and for the MBS services on the MBS BWP/CFR is indicated in the WUS.

Embodiments herein also enable the UE 204 to manage performing of MBS measurements on the unicast BWP, if the UE 204 is configured to monitor the DCI for receiving the WUS. The UE 204 performs the MBS measurements on the unicast BWP during an active time and/or during a timer duration indicated by a DRX ON-duration timer outside the active time based on at least one of, a Channel State Information Reference Signal (CSI-RS) reference signal configuration, a Demodulation reference signal (DMRS) reference signal configuration, and a common RS (MBS RS) reference signal configuration. The active time or the timer duration indicated by the DRX ON-duration timer outside the active time corresponds to at least one of, the unicast DRX configuration or the MBS service DRX configuration for the at least one MBS service.

Embodiments herein enable the UE 204 to manage performing of the MBS measurements on the MBS BWP/CFR based on configurations of the UE 204 to receive the WUS.

If the UE 204 is configured to monitor the DCI for receiving the WUS, the UE 204 performs the MBS measurements on the MBS BWP associated with the unicast BWP during at least one of, the active time and the timer duration indicated by the DRX ON-duration timer outside the active time, based on at least one of, the CSI-RS reference signal configuration, the MBS RS reference signal configuration for the BWP. The UE 204 skips the MBS measurements on the MBS BWP/CFR associated with the unicast BWP other than at least one of, during the active time and during the timer duration indicated by the DRX ON-duration timer outside the active time, based on at least one of, the CSI-RS reference signal configuration, the DMRS reference signal configuration, and the MBS RS reference signal configuration of the MBS BWP/CFR.

If the UE 204 is configured with the unicast DRX configuration, the UE 204 performs measurements of CSI-RS resources in the unicast BWP during the active time of the unicast DRX configuration. The UE 204 may also perform the measurements of at least one of, the CSI-RS resources, DMRS resources, and MBS RS resources in the MBS BWP/CFR during the active time of the unicast DRX configuration applicable for the UE 204 to receive the specific MBS services on the MBS BWP/CFR.

If the UE 204 is configured with the MBS service DRX configuration and the unicast DRX configuration, the UE 204 expects the CSI-RS resources available during the active time of the unicast DRX configuration and performing the measurements based on a CSI-RS resource configuration for the unicast BWP. The UE 204 may also expect at least one of, the CSI-RS resources, the DMRS resources, and the MBS RS resources on the MBS BWP, or CFR and perform the measurements during the active time of the MBS service DRX configuration applicable for the UE 204 to receive the specific MBS services in the MBS BWP/CFR.

If the UE 204 is configured to monitor the DCI format for receiving the WUS, the UE 204 expects at least one of, the CSI-RS, the DMRS resources, and the MBS RS resources for measurements on the MBS BWP/CFR during an inactive time of the MBS service DRX cycle, when at least one of, a unicast DRX cycle is equal to or lesser than a pre-defined duration and the MBS service DRX cycle is equal to or lesser than the pre-defined duration. In an example, the pre-defined duration may be 80 milliseconds (ms) (as defined in the 3GPP specification). The UE 204 also expects at least one of, the CSIRS resources, the DMRS resources, and the MBS RS resources for the measurements on the MBS BWP/CFR during the active time of the MBS service DRX cycle, when at least one of the unicast DRX cycle is greater than the pre-defined duration and the MBS service DRX cycle is greater than the pre-defined duration.

In an embodiment, the UE 204 may receive the MBS services in the PTP deliver mode over the unicast BWP along with the other unicast services and follow the same unicast service DRX configuration and timings. The UE 204 may receive the MBS services in the PTM delivery mode over the MBS BWP/CFR and may have the specific MBS service DRX configuration and timings. As the unicast service DRX configuration and the MBS service DRX configuration may not have alignment (as the unicast service DRX configuration is UE specific and the MBS service DRX configuration is a UE group specific (i.e., common MBS service specific)), the UE 204 receiving both the unicast services and the MBS services required to be awake much longer or more times causing an increase in the power consumption. Moreover, for the reliable MBS services, there may be a feedback (for example, a Hybrid Automatic Repeat Request (HARQ) feedback, sending of UE assistance information to the network 202, a CSI feedback) as well as measurement reporting that have to be carried over a unicast uplink BWP on channels like a Physical Uplink Shared Channel (PUSCH), and a Physical Uplink Control Channel (PUCCH). Since measurement operations on a HARQ transmission/retransmissions are performed during the active time of the MBS DRX cycle, the corresponding measurement report, the CSI feedback, the HARQ feedback, the UE assistance information, or the like may be generated at about the same time and may have to be transmitted at the earliest to the network 202 to ensure that updated information have been conveyed to the network 202. Such timings may not match with the active time of the unicast DRX cycle and therefore, the arrival of uplink data, signaling or uplink control information (UCI) causes a DRX sleep period to be broken as a triggered Scheduling Request (SR) and/or a Random Access (RA). Such timings mismatch may quite to be detrimental to the power consumption of the UE 204 apart from the reception of the MBS services on the MBS BWP/CFR, which thereby forces the UE 204 to be awake and transmit on the uplink unicast BWP as well. Further, mobility measurement reports and/or the UE assistance information may be deferred to be aligned with a unicast active time. The HARQ feedback, the CSI feedback may be skipped by the UE 204, as other UEs may be providing the HARQ feedback and/or the CSI feedback and resultant retransmission or channel tuning may still be advantageous to the UE 204. Further, the HARQ feedback may be conditionally reported, only if a Negative Acknowledgement (NACK)) to be reported by the UE 204. Similarly, if there is poor CSI or a large deviation in the CSI feedback, the UE 204 may conditionally report the CSI feedback to the network 202. Further, the UE 204 may report the HARQ feedback and/or the CSI feedback to the network 202, if the UE 204 is in the inactive time of the unicast DRX cycle. With the above mentioned approaches, the UE 204 may further limit the unicast uplink transmissions and may require breaking of the DRX sleep of the unicast.

Thus, embodiments herein enable the UE 204 to send at least one of, a HARQ feedback, a CSI feedback, measurement reporting, UE assistance information and uplink signalling messaging pertaining to the MBS services to the network 202 over at least one physical channel mapped to one of:

- the unicast uplink (UL) BWP, wherein the UE 204 uses exclusively UE specific PDCCH on the unicast BWP with the UE specific Physical Downlink Shared Channel (PDSCH) on the unicast BWP;
- the unicast uplink BWP, wherein the UE 204 uses exclusively UE specific PDCCH on the unicast BWP with a group common PDSCH on the MBS BWP/CFR;
- an MBS uplink BWP, wherein the UE 204 uses exclusively UE specific PDCCH on the unicast BWP with the group common PDSCH on the MBS BWP/CFR;
- the MBS uplink BWP, wherein the UE 204 uses exclusively group common PDCCH on the MBS BWP/CFR with the group common PDSCH on the MBS BWP/CFR; and
- the MBS uplink BWP, wherein the UE 204 uses exclusively the UE specific PDCCH on the MBS BWP/CFR with the group common PDSCH on the MBS BWP/CFR.

The UE 204 selects an uplink physical channel over the unicast BWP or the MBS BWP/CFR in accordance with the unicast DRX configuration and/or the MBS service DRX configuration. The UE 204 applies the MBS service DRX configuration on an uplink feedback channel and uses the uplink feedback channel for an uplink feedback transmission, if the uplink feedback channel is pre-configured or configured by the network 202 with the MBS service DRX configuration.

In an embodiment, the UE 204 triggers a UE MBS assistance information message periodically or based on detection of at least one event. In an example, the at least one event may be an initiation of a new MBS service reception. The UE 204 sends the UE MBS assistance information message to the network 202 as an RRC signaling message on a preferred DRX configuration for the unicast.

In an example, the UE 204 indicates preferred unicast connected DRX (C-DRX) configuration parameters in the UE MBS assistance information message, while considering the reception of the MBS services and/or MBS service DRX configuration for the MBS services on the MBS BWP/CFR and/or the multicast services and/or the broadcast services (since some of the multicast services and/or the broadcast services may not require joining procedure and thereby the network 202 is not aware of the reception of the MBS services on the UE 204).

In another example, the UE 204 indicates the MBS information like the G-RNTI, the G-CS-RNTI or the TMGI in the UE MBS assistance information message, thus the network 202 infers the relevant DRX configuration of the MBS services applicable to the UE 204 and devises the new set of unicast DRX configuration/parameters for the UE 204. Thus, resulting in a better DRX alignment and/or lesser wake time for the UE 204 and/or lesser power consumption for the UE 204.

FIG. 2 shows exemplary elements of the MBS communication system 200, but it is to be understood that other embodiments are not limited thereon. In other embodiments, the MBS communication system 200 may include less or a greater number of elements/units. Further, the labels or names of the units are used only for illustrative purpose and does not limit the scope of the embodiments herein. One or more units can be combined together to perform same or substantially similar function in the MBS communication system 200.

FIG. 4 is an example block diagram depicting components of the UE 204 for receiving the MBS services with the reduced power consumption, according to embodiments as disclosed herein. The UE 204 includes a memory 402, an interface 404, and a processing circuitry 406. The UE 204 may also include at least one of, at least one antenna, at least one Radio Frequency (RF) transceiver coupled to the processing circuitry 406, a transmission processing circuitry, a reception processing circuitry, and so on (not shown).

The memory 402 stores at least one of, the PO, the PF, the alternative UE_ID, the offset/offset value, the unicast DRX configuration, the MBS service DRX configuration, the WUS, the DCI allocations, the unicast DCI allocations, the MBS DCI allocations, the HARQ feedback, the CSI feedback, the UE assistance information, and so on. Examples of the memory 402 may be, but are not limited to, NAND, embedded Multimedia Card (eMMC), Secure Digital (SD) cards, Universal Serial Bus (USB), Serial Advanced Technology Attachment (SATA), solid-state drive (SSD), and so on. The memory 402 may also include one or more computer-readable storage media. The memory 402 may also include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 402 may, in some examples, be considered a non-transitory storage medium. The term "non-transitory" may indicate that the storage medium is not embodied in a carrier wave or a propagated signal. However, the term "non-transitory" should not be interpreted to mean that the memory 402 is non-movable. In some examples, the memory 402 may be configured to store larger amounts of information than the memory. In certain examples, a non-transitory storage medium may store data that can, over time, change (e.g., in Random Access Memory (RAM) or cache).

The interface 404 may be configured to enable the UE 204 to communicate with the BS/network 202 through an interface. Examples of the interface may be, but are not limited to, a wired or wireless fronthaul interface, a wired or wireless backhaul interface, or any other structure supporting communications over a wired or wireless connection.

The processing circuitry 406 includes at least one of, a single processer, a plurality of processors, multiple homogeneous or heterogeneous cores, multiple Central Processing Units (CPUs) of different kinds, microcontrollers, special media, and other accelerators.

The processing circuitry 406 may be configured to enable the UE 204 to receive the MBS services with the reduced power consumption. For receiving the MBS services, the processing circuitry 406 performs at least one power saving action based on the current mode of the UE 204. If the UE 204 is the idle mode/inactive mode, the power saving action performed by the processing circuitry 406 includes aligning the PO of the paging reception to match the awake periods of the paging DRX cycle with the awake periods of the DRX configuration intended for the reception of the MBS services. If the UE 204 is in the connected mode, the processing circuitry 406 receives the WUS from the network 202 indicating the presence or absence of the allocations for the UE 204 to receive the MBS services in the at least one MBS service DRX cycle. The processing circuitry 406 manages the DRX cycle using the PO alignment or the WUS depending on the current mode of the UE 204 to receive the MBS services.

The processing circuitry 406 may also be configured to manage performing of at least one of, the MBS measurements, measurements of resources, or the like, on the unicast BWP and the MBS BWP/CFR, if the UE 204 is configured to monitor the DCI for receiving the WUS, or if the UE 204 is configured with the unicast DRX configuration or the MBS service DRX configuration, or the like.

The processing circuitry 406 may also be configured to send at least one of, the HARQ feedback, the CSI feedback, the measurement reporting, the UE assistance information, the uplink signalling messaging, or the like, pertaining to the MBS services to the network 202 over the at least one physical channel mapped to the unicast uplink BWP, the MBS uplink BWP, or the like.

The processing circuitry 406 may also be configured to select the uplink physical channel over the unicast BWP or the MBS BWP/CFR in accordance with the unicast DRX configuration and/or the MBS service DRX configuration. The processing circuitry 406 may also be configured to apply the MBS service configuration on the uplink feedback channel and use the uplink feedback channel for the uplink feedback transmission, if the uplink feedback channel is pre-configured or configured by the network 202 with the MBS service DRX configuration.

FIG. 4 shows exemplary elements of the UE 204, but it is to be understood that other embodiments are not limited thereon. In other embodiments, the UE 204 may include less or a greater number of elements/units. Further, the labels or names of the units are used only for illustrative purpose and does not limit the scope of the embodiments herein. One or more units can be combined together to perform same or substantially similar function in the UE 204.

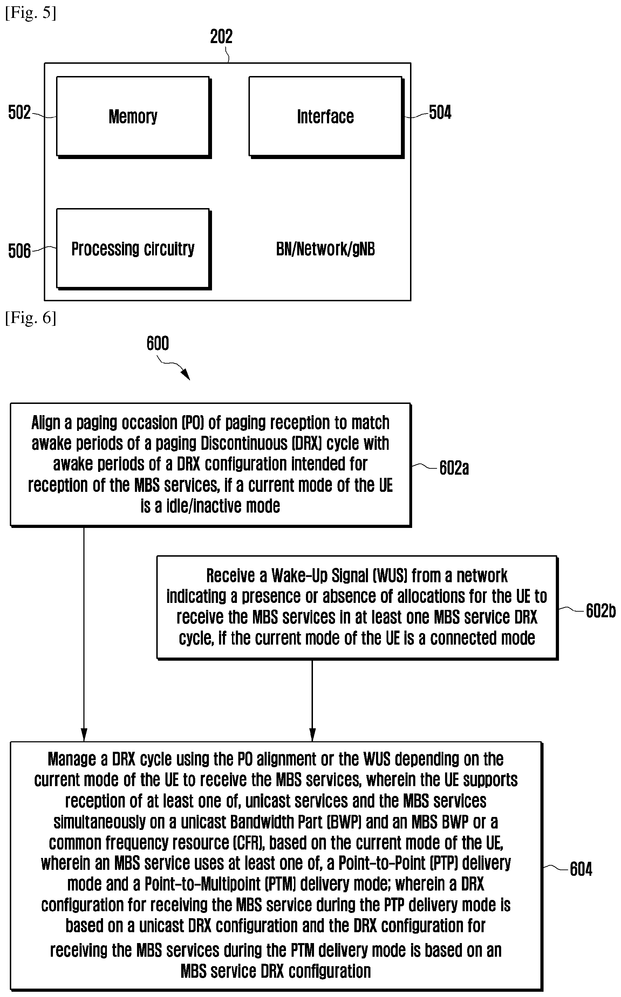

FIG. 5 is an example block diagram depicting components of the BS/network/gNB 202 in the MBS communication system, according to embodiments as disclosed herein. The BS/network/gNB 202 includes a memory 502, an interface 504, and a processing circuitry 506. The BS 202 may also include at least one of, at least one antenna, at least one RF transceiver, a transmission processing circuitry, a reception processing circuitry, and so on (not shown).

The memory 502 stores at least one of, but is not limited to, the new UE_ID, the WUS, and so on. Examples of the memory 502 may be, but are not limited to, NAND, embedded Multimedia Card (eMMC), Secure Digital (SD) cards, Universal Serial Bus (USB), Serial Advanced Technology Attachment (SATA), solid-state drive (SSD), and so on. The memory 502 may also include one or more computer-readable storage media. The memory 502 may also include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 502 may, in some examples, be considered a non-transitory storage medium. The term "non-transitory" may indicate that the storage medium is not embodied in a carrier wave or a propagated signal. However, the term "non-transitory" should not be interpreted to mean that the memory 502 is non-movable. In some examples, the memory 502 may be configured to store larger amounts of information than the memory. In certain examples, a non-transitory storage medium may store data that can, over time, change (e.g., in Random Access Memory (RAM) or cache).

The interface 504 may be configured to enable the BS/network 202 to communicate with the UEs 204 through an interface. Examples of the interface may be, but are not limited to, a wired or wireless fronthaul interface, a wired or wireless backhaul interface, or any other structure supporting communications over a wired or wireless connection.

The processing circuitry 506 includes at least one of, a single processer, a plurality of processors, multiple homogeneous or heterogeneous cores, multiple Central Processing Units (CPUs) of different kinds, microcontrollers, special media, and other accelerators. The processing circuitry 506 may be configured to manage broadcast of the one or more MBS services to the UE 204.

In an embodiment, the processing circuitry 506 may be configured to provide the new UE_ID to the UE 204, which may be used by the UE 204 to align the PO when the UE 204 is in the idle/inactive mode. In an example, the processing circuitry 506 may provide the new UE_ID to the UE 204, on initiating the GUTI reassignment procedure by the UE 204 with the network 202. In another example, the processing circuitry 506 may provide the new UE_ID to the UE 204, on receiving the alternative UE_ID from the UE 204. In another example, the processing circuitry 506 may provide the new UE_ID to the UE 204, on receiving the offset/offset value from the UE 204. In another example, the processing circuitry 506 may provide the new UE_ID to the UE 204, on receiving the MBS assistance information from the UE 204.

The processing circuitry 506 may also be configured to provide the WUS to the UE 204 in different formats, when the UE 204 is in the connected mode. The WUS may indicate the presence or absence of allocations for the UE 204 to receive the MBS services in the at least one MBS service DRX cycle.

FIG. 5 shows exemplary elements of the network/BS 202, but it is to be understood that other embodiments are not limited thereon. In other embodiments, the network/BS 202 may include less or a greater number of elements/units. Further, the labels or names of the units are used only for illustrative purpose and does not limit the scope of the embodiments herein. One or more units can be combined together to perform same or substantially similar function in the network/BS 202.

FIG. 6 is a flowchart 600 depicting a method for managing the DRX operations for receiving the MBS services on the UE 204, according to embodiments as disclosed herein.

The method includes performing, by the UE 204, step 602a or 602b, based on the current mode of the UE 204. The UE 204 performs step 602a, when the UE 204 is in the idle mode or the inactive mode. The UE 204 performs the step 604b, when the UE 204 is in the connected mode. At step 602a, the UE 204 aligns the PO of the paging reception to match the awake periods of the paging DRX cycle with the awake periods of the DRX configuration intended for reception of the MBS services. At step 602b, the UE 204 receives the WUS from the network 202 indicating the presence or absence of the allocations for the UE 204 to receive the MBS services in the at least one MBS service DRX cycle.

At step 604, the method includes managing, by the UE 604, the DRX cycle using the PO alignment or the WUS depending on the current mode of the UE 204 to receive the MBS services. The UE 204 supports the reception of at least one of, the unicast services and the MBS services simultaneously on the unicast BWP and the MBS BWP/CFR, based on the current mode of the UE 204. The MBS service uses at least one of, the PTP delivery mode, the PTM delivery mode, and the combination of the PTP and the PTM delivery mode, wherein the DRX configuration for receiving the MBS services during the PTP delivery mode is based on the unicast DRX configuration and the DRX configuration for receiving the MBS services during the PTM delivery mode is based on the MBS service DRX configuration. The various actions in method 600 may be performed in the order presented, in a different order or simultaneously. Further, in some embodiments, some actions listed in FIG. 6 may be omitted.

FIG. 7 is a flowchart 700 depicting a method for aligning the PO based on the GUTI reassignment procedure, according to embodiments as disclosed herein.

At step 702, the method includes determining, by the UE 204, that the current PO is not suitable for the reduced power consumption in conjunction with the MBS service scheduling or the MBS service DRX configuration. At step 704, the method includes determining, by the UE 204, the alternative UE_ID or the offset that provides for the closeby PO for the paging and MBS reception occasions.

At step 706, the method includes initiating the GUTI reassignment procedure with the network 202, on determining the current PO is not suitable for the reduced power consumption. In an embodiment, the GUTI reassignment procedure includes sending the GUTI reassignment request to the network 202 in the NAS signaling. In another embodiment, the GUTI reassignment procedure includes sending the GUTI reassignment request with the alternative UE_ID to the network 202 in the NAS signaling. In another embodiment, the GUTI reassignment procedure includes sending the GUTI reassignment request with the offset to the network 202 in the NAS signaling.

At step 708, the method includes receiving, by the UE 204, the new GUTI from the network 202 in response to the initiated GUTI reassignment procedure. The new GUTI may include the new UE_ID reallocated by the network 202 for the UE 204.

At step 710, the method includes altering, by the UE 204, the paging reception operation with the new PO in accordance with the received new UE_ID in the new GUTI. The various actions in method 700 may be performed in the order presented, in a different order or simultaneously. Further, in some embodiments, some actions listed in FIG. 7 may be omitted.

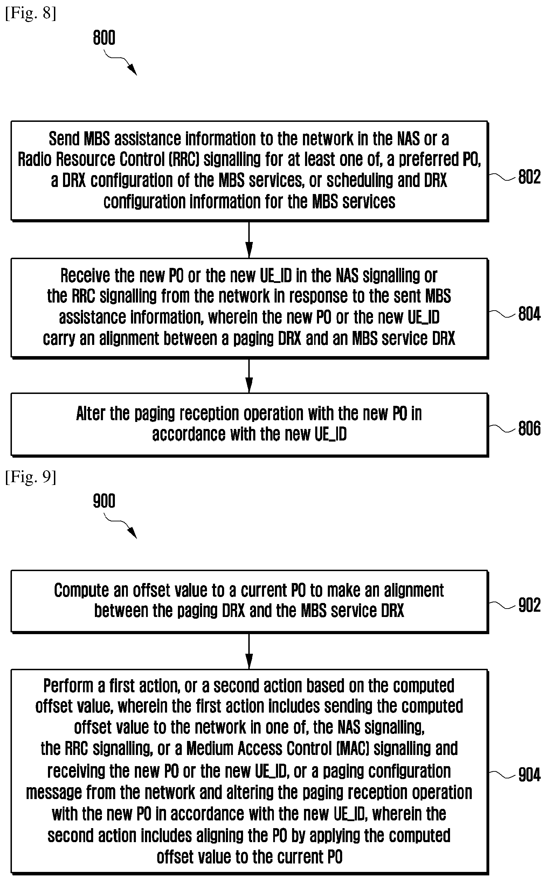

FIG. 8 is a flowchart 800 depicting a method for aligning the PO based on the MBS assistance information/MBS scheduling information, according to embodiments as disclosed herein.

At step 802, the method includes sending, by the UE 204, the MBS assistance information to the network 202 in the NAS signalling or the RRC signalling for at least one of, the preferred PO, the DRX configuration of the MBS services, or the scheduling and DRX configuration information for the MBS services. The MBS assistance information includes the MBS service information, or the alternative UE_ID or the offset, wherein the MBS service information includes one of, the G-RNTI, the G-CS-RNTI or the TMGI.

At step 804, the method includes receiving, by the UE 204, the new PO or the new UE_ID in the NAS signaling or the RRC signaling from the network 202 in response to the sent MBS assistance information. The new PO carries the alignment between the paging DRX and the MBS service DRX.

At step 806, the method includes altering, by the UE 204, the paging reception operation with the new PO in accordance with the new UE_ID. The various actions in method 800 may be performed in the order presented, in a different order or simultaneously. Further, in some embodiments, some actions listed in FIG. 8 may be omitted.

FIG. 9 is a flowchart 900 depicting a method for aligning the PO based on the offset, according to embodiments as disclosed herein.

At step 902, the method includes computing, by the UE 204, the offset to the current PO to make the alignment between the paging DRX and the MBS service DRX.

At step 904, the method includes performing, by the UE 204, the first action or the second action based on the computed offset value. The first action includes sending the computed offset value to the network in one of, the NAS signalling, the RRC signalling, or the MAC signalling, receiving the new PO or the new UE_ID, or the paging message from the network, and altering the paging reception operation with the new PO. The second action includes aligning the PO by applying the computed offset value to the current PO. The various actions in method 900 may be performed in the order presented, in a different order or simultaneously. Further, in some embodiments, some actions listed in FIG. 9 may be omitted.

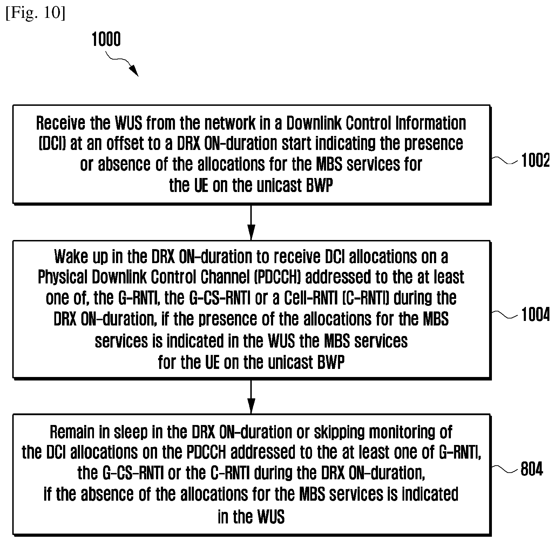

FIG. 10 is a flowchart 1000 depicting a method for managing the DRX based on the WUS received from the network 202 to receive the MBS services, according to embodiments as disclosed herein.

At step 1002, the method includes receiving, by the UE 204, the WUS from the network 202 in the DCI at the offset to the DRX ON-duration start indicating the presence or absence of the allocations for the MBS services (including the PTP bearer, the PTM bearer, or the combination of the PTP bearer and the PTM bearer) for the UE 204 on the unicast BWP.

At step 1004, the method includes waking up, by the UE 204, in the DRX ON-duration to receive the DCI allocations on the PDCCH addressed to the at least one of, the G-RNTI, the G-CS-RNTI, or C-RNTI during the DRX ON-duration, if the presence of the allocations for the MBS services is indicated in the WUS.

At step 1006, the method includes remaining, by the UE 204, in sleep in the DRX ON-duration or skipping monitoring of the DCI allocations on the PDCCH addressed to the at least one of G-RNTI, the G-CS-RNTI or the C-RNTI during the DRX ON-duration, if the absence of the allocations for the MBS services is indicated in the WUS. The various actions in method 1000 may be performed in the order presented, in a different order or simultaneously. Further, in some embodiments, some actions listed in FIG. 10 may be omitted.

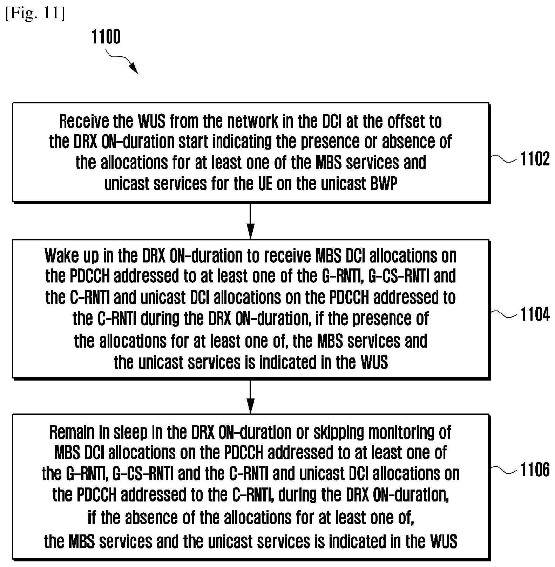

FIG. 11 is a flowchart 1100 depicting another method for managing the DRX cycle based on the WUS received from the network 202 to receive the MBS services, according to embodiments as disclosed herein.

At step 1102, the method includes receiving, by the UE 204, the WUS from the network 202 in the DCI at the offset to the DRX ON-duration start indicating the presence or absence of the allocations for at least one of the MBS services and the unicast services for the UE 204 on the unicast BWP.

At step 1104, the method includes waking up, by the UE 204, in the DRX ON-duration to receive the MBS DCI allocations on the PDCCH addressed to at least one of the G-RNTI, the G-CS-RNTI and the C-RNTI and the unicast DCI allocations on the PDCCH addressed to the C-RNTI during the DRX ON-duration, if the presence of the allocations for at least one of, the MBS services and the unicast services is indicated in the WUS.

At step 1106, the method includes remaining, by the UE 204, in sleep in the DRX ON-duration or skipping monitoring of the MBS DCI allocations on the PDCCH addressed to at least one of the G-RNTI, the G-CS-RNTI and the C-RNTI and the unicast DCI allocations on the PDCCH addressed to the C-RNTI, during the DRX ON-duration, if the absence of the allocations for at least one of, the MBS services and the unicast services is indicated in the WUS. The various actions in method 1100 may be performed in the order presented, in a different order or simultaneously. Further, in some embodiments, some actions listed in FIG. 11 may be omitted.

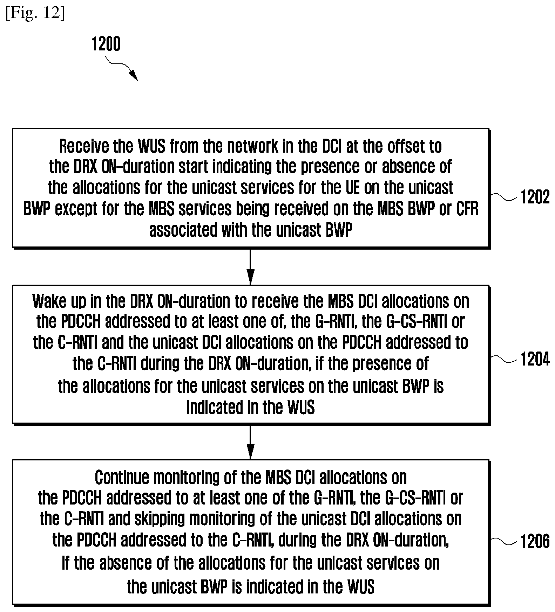

FIG. 12 is a flowchart 1200 depicting another method for managing the DRX cycle based on the WUS received from the network 202 to receive the MBS services, according to embodiments as disclosed herein.

At step 1202, the method includes receiving, by the UE 204, the WUS from the network 202 in the DCI at the offset to the DRX ON-duration start indicating the presence or absence of the allocations for the unicast services for the UE 204 on the unicast BWP except for the MBS services being received on the MBS BWP/CFR associated with the unicast BWP.

At step 1204, the method includes waking up, by the UE 204, in the DRX ON-duration to receive the MBS DCI allocations on the PDCCH addressed to at least one of, the G-RNTI, the G-CS-RNTI or the C-RNTI and the unicast DCI allocations on the PDCCH addressed to the C-RNTI during the DRX ON-duration, if the presence of the allocations for the unicast services on the unicast BWP is indicated in the WUS.

At step 1206, the method includes continuing, by the UE 204, monitoring of the MBS DCI allocations on the PDCCH addressed to at least one of the G-RNTI, the G-CS-RNTI or the C-RNTI and skipping monitoring of the unicast DCI allocations on the PDCCH addressed to the C-RNTI, during the DRX ON-duration, if the absence of the allocations for the unicast services on the unicast BWP is indicated in the WUS. The various actions in method 1200 may be performed in the order presented, in a different order or simultaneously. Further, in some embodiments, some actions listed in FIG. 12 may be omitted.

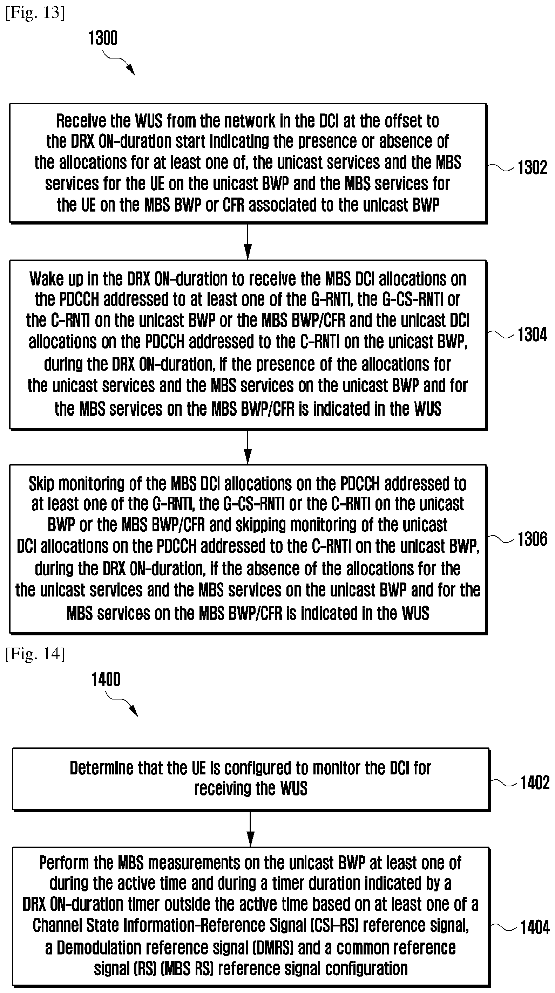

FIG. 13 is a flowchart 1300 depicting another method for managing the DRX cycle based on the WUS received from the network 202 to receive the MBS services, according to embodiments as disclosed herein.

At step 1302, the method includes receiving, by the UE 204, the WUS from the network in the DCI at the offset to the DRX ON-duration start indicating the presence or absence of the allocations for at least one of, the unicast services and the MBS services for the UE 204 on the unicast BWP and the MBS services for the UE on the MBS BWP/CFR associated to the unicast BWP.

At step 1304, the method includes waking up, by the UE 204, in the DRX ON-duration to receive the MBS DCI allocations on the PDCCH addressed to at least one of the G-RNTI, the G-CS-RNTI or the C-RNTI on the unicast BWP or the MBS BWP/CFR and the unicast DCI allocations on the PDCCH addressed to the C-RNTI on the unicast BWP, during the DRX ON-duration, if the presence of the allocations for at least one for the unicast services and at least one of the MBS services on the unicast BWP and for at least one of the MBS services on the MBS BWP/CFR is indicated in the WUS.

At step 1306, the method includes skipping, by the UE 204, monitoring of the MBS DCI allocations on the PDCCH addressed to at least one of the G-RNTI, the G-CS-RNTI or the C-RNTI on the unicast BWP or the MBS BWP/CFR and skipping monitoring of the unicast DCI allocations on the PDCCH addressed to the C-RNTI on the unicast BWP, during the DRX ON-duration, if the absence of the allocations for the unicast services and the MBS services on the unicast BWP and for the MBS services on the MBS BWP/CFR is indicated in the WUS. The various actions in method 1300 may be performed in the order presented, in a different order or simultaneously. Further, in some embodiments, some actions listed in FIG. 13 may be omitted.

FIG. 14 is a flowchart 1400 depicting a method for managing performing of the MBS measurements on the unicast BWP, according to embodiments as disclosed herein.

At step 1402, the method includes determining, by the UE 204, that the UE 204 is configured to monitor the DCI for receiving the WUS.

At step 1404, the method includes performing, by the UE 204, the MBS measurements on the unicast BWP during at least one of, the active time, or the timer duration indicated by the DRX ON-duration timer outside the active time based on at least one of, the CSI-RS reference signal, the DMRS reference signal configuration, and the MBS RS reference signal configuration. Further, the active time or the timer duration indicated by the DRX ON-duration timer outside the active time correspond to at least one of unicast DRX configuration and MBS service DRX configuration for at least one MBS service. The various actions in method 1400 may be performed in the order presented, in a different order or simultaneously. Further, in some embodiments, some actions listed in FIG. 14 may be omitted.

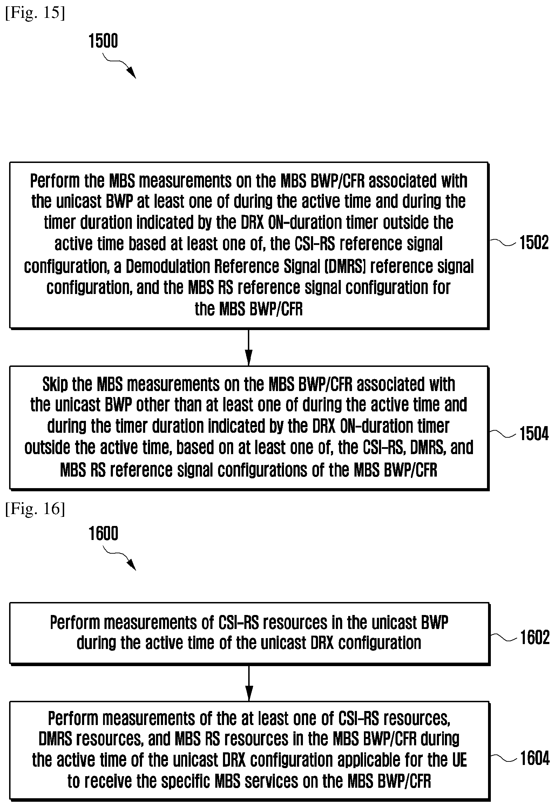

FIG. 15 is a flowchart 1500 depicting a method for managing performing of the MBS measurements on the MBS BWP/CFR, if the UE 204 is configured to monitor the DCI for receiving the WUS, according to embodiments as disclosed herein.

At step 1502, the method includes performing, by the UE 204, the MBS measurements on the MBS BWP/CFR associated with the unicast BWP at least one of during the active time and during the timer duration indicated by the DRX ON-duration timer outside the active time based at least one of, the CSI-RS reference signal configuration, the DMRS reference signal configuration, and the MBS RS reference signal configuration for the MBS BWP/CFR.

At step 1504, the method includes skipping, by the UE 204, the MBS measurements on the MBS BWP/CFR associated with the unicast BWP other than at least one of during the active time and during the timer duration indicated by the DRX ON-duration timer outside the active time, based on at least one of, the CSI-RS reference signal configuration, the DMRS reference signal configuration, and the MBS RS reference signal configuration of the MBS BWP/CFR. Further the active time or the timer duration indicated by the DRX ON-duration timer outside the active time corresponds to at least one of, the unicast DRX configuration and the MBS service DRX configuration for the at least one MBS service. The various actions in method 1500 may be performed in the order presented, in a different order or simultaneously. Further, in some embodiments, some actions listed in FIG. 15 may be omitted.

FIG. 16 is a flowchart 1600 depicting a method for managing performing of the MBS measurements on the MBS BWP/CFR, if the UE 204 is configured with the unicast DRX configuration, according to embodiments as disclosed herein.

At step 1602, the method includes performing, by the UE 204, the measurements of the CSI-RS resources in the unicast BWP during the active time of the unicast DRX configuration.

At step 1604, the method includes performing, by the UE 204, the measurements of the at least one of CSI-RS resources, the DMRS resources, and the MBS RS resources in the MBS BWP/CFR during the active time of the unicast DRX configuration applicable for the UE to receive the specific MBS services on the MBS BWP/CFR. The various actions in method 1600 may be performed in the order presented, in a different order or simultaneously. Further, in some embodiments, some actions listed in FIG. 16 may be omitted.

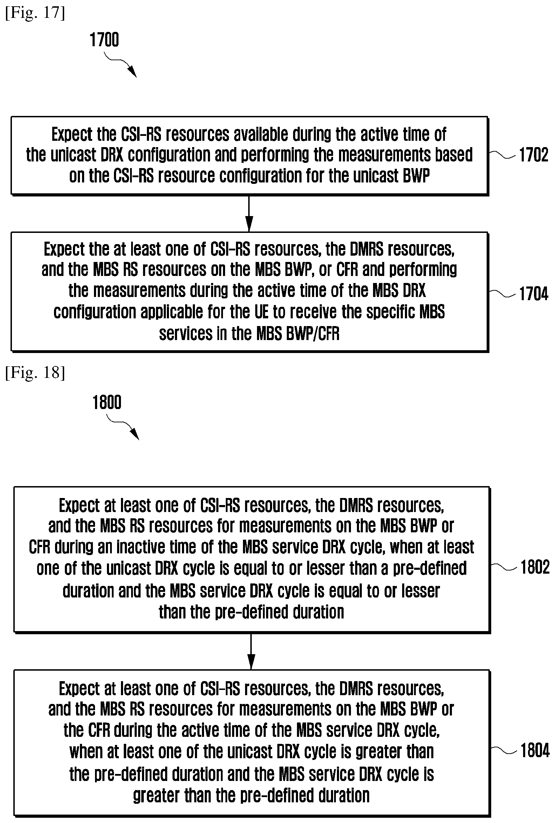

FIG. 17 is a flowchart 1700 depicting a method for managing performing of the MBS measurements on the MBS BWP/CFR, if the UE 204 is configured with the MBS service DRX configuration and the unicast DRX configuration, according to embodiments as disclosed herein.

At step 1702, the method includes expecting, by the UE 204, the CSI-RS resources available during the active time of the unicast DRX configuration and performing the measurements based on the CSI-RS resource configuration for the unicast BWP.

At step 1704, the method includes expecting, by the UE 204, the at least one of, the CSI-RS resources, the DMRS resources, and the MBS RS resources on the MBS BWP/CFR and performing the measurements during the active time of the MBS service DRX configuration applicable for the UE to receive the specific MBS services in the MBS BWP/CFR. The various actions in method 1700 may be performed in the order presented, in a different order or simultaneously. Further, in some embodiments, some actions listed in FIG. 17 may be omitted.

FIG. 18 is a flowchart 1800 depicting another method for managing performing of the MBS measurements on the MBS BWP/CFR, if the UE 204 is configured to monitor the DCI format for receiving the WUS, according to embodiments as disclosed herein.

At step 1802, the method includes expecting, by the UE 204, at least one of, the CSI-RS resources, the DMRS resources, and the MBS RS resources for measurements on the MBS BWP/CFR during the inactive time of the MBS service DRX cycle, when at least one of the unicast DRX cycle is equal to or lesser than the pre-defined duration and the MBS service DRX cycle is equal to or lesser than the pre-defined duration.

At step 1804, the method includes expecting, by the UE 204, at least one of, the CSI-RS resources, the DMRS resources, and the MBS RS resources for measurements on the MBS BWP/CFR during the active time of the MBS service DRX cycle, when at least one of the unicast DRX cycle is greater than the pre-defined duration and the MBS service DRX cycle is greater than the pre-defined duration. The various actions in method 1800 may be performed in the order presented, in a different order or simultaneously. Further, in some embodiments, some actions listed in FIG. 18 may be omitted.

The embodiments disclosed herein can be implemented through at least one software program running on at least one hardware device and performing network management functions to control the elements. The elements shown in FIGs. 2, 4, and 5 can be at least one of a hardware device, or a combination of hardware device and software module.

The embodiments disclosed herein describe methods and systems for managing DRX and WUS operations for receiving MBS services. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in a preferred embodiment through or together with a software program written in e.g. Very high speed integrated circuit Hardware Description Language (VHDL) another programming language, or implemented by one or more VHDL or several software modules being executed on at least one hardware device. The hardware device can be any kind of portable device that can be programmed. The device may also include means which could be e.g. hardware means like e.g. an ASIC, or a combination of hardware and software means, e.g. an ASIC and an FPGA, or at least one microprocessor and at least one memory with software modules located therein. The method embodiments described herein could be implemented partly in hardware and partly in software. Alternatively, the invention may be implemented on different hardware devices, e.g. using a plurality of CPUs.

**EP 4 252 460 B1**

**Claims**

1. A method performed by a user equipment, UE, (204) in a communication system, the method comprising:

receiving a first discontinuous reception, DRX, configuration, a second DRX configuration and a configuration to monitor downlink control information, DCI, corresponding to a wake up signal, WUS, wherein the first DRX configuration is used for both unicast transmission and point-to-point, PTP, transmission associated with multicast broadcast service, MBS, and the second DRX configuration is used for point-to-multipoint, PTM, transmission associated with the MBS;
receiving, based on the configuration, the DCI corresponding to the WUS;
identifying, based on the DCI corresponding to the WUS, whether to monitor first DCI for the PTP transmission on a first DRX on-duration of the first DRX configuration, wherein the first DCI is addressed to a cell-radio network temporary identifier, C-RNTI;
monitoring the first DCI on the first DRX on-duration in case of identifying to monitor the first DCI; and
monitoring second DCI for the PTM transmission on a second DRX on-duration of the second DRX configuration, wherein the second DCI is addressed to a group-radio network temporary identifier, G-RNTI.

2. The method of claim 1, wherein the second DCI is monitored on the second DRX on-duration regardless of the DCI corresponding to the WUS.

3. The method of claim 1, further comprising:
skipping monitoring the first DCI on the first DRX on-duration in case of identifying not to monitor the first DCI.

4. The method of claim 1, further comprising:
identifying not to perform a measurement-related operation associated with a channel state information-reference signal, CSI-RS, based on the configuration and being not in a DRX active time.

5. The method of claim 1, wherein the first DRX on-duration is identified based on the first DRX configuration and an offset from the DCI corresponding to the WUS.

6. A user equipment, UE (204), in a communication system, the UE (204) comprising:

a transceiver; and
a processor coupled with the transceiver and configured to:

receive a first discontinuous reception, DRX, configuration, a second DRX configuration and a configuration to monitor downlink control information, DCI, corresponding to a wake up signal, WUS, wherein the first DRX configuration is used for both unicast transmission and point-to-point, PTP, transmission associated with multicast broadcast service, MBS, and the second DRX configuration is used for point-to-multipoint, PTM, transmission associated with the MBS;
receive, based on the configuration, the DCI corresponding to the WUS;
identify, based on the DCI corresponding to the WUS, whether to monitor first DCI for the PTP transmission on a first DRX on-duration of the first DRX configuration, wherein the first DCI is addressed to a cell-radio network temporary identifier, C-RNTI;
monitor the first DCI on the first DRX on-duration in case of identifying to monitor the first DCI; and
monitor second DCI for the PTM transmission on a second DRX on-duration of the second DRX configuration, wherein the second DCI is addressed to a group-radio network temporary identifier, G-RNTI.

7. The UE (204) of claim 6, wherein the processor is configured to perform the method according to any one of claims 2 to 5.

8. A method performed by a base station (202) in a communication system, the method comprising:

transmitting a first discontinuous reception, DRX, configuration, a second DRX configuration and a configuration to monitor downlink control information, DCI, corresponding to a wake up signal, WUS, wherein the first DRX configuration is used for both unicast transmission and point-to-point, PTP, transmission associated with multicast broadcast service, MBS, and the second DRX configuration is used for point-to-multipoint, PTM, transmission associated with the MBS;

17

identifying whether to transmit first DCI for the PTP transmission on a first DRX on-duration of the first DRX configuration, wherein the first DCI is addressed to a cell-radio network temporary identifier, C-RNTI; transmitting the DCI corresponding to the WUS, wherein the DCI corresponding to the WUS indicates to monitor the first DCI in case of identifying to transmit the first DCI; transmitting the first DCI on the first DRX on-duration in case of identifying to transmit the first DCI; and transmitting second DCI for the PTM transmission on a second DRX on-duration of the second DRX configuration, wherein the second DCI is addressed to a group-radio network temporary identifier, G-RNTI.

9. The method of claim 8, wherein the second DCI is transmitted on the second DRX on-duration regardless of the DCI corresponding to the WUS.

10. The method of claim 9, further comprising:

skipping transmitting the first DCI on the first DRX on-duration in case of identifying not to transmit the first DCI, wherein the DCI corresponding to the WUS indicates not to monitor the first DCI in case of identifying not to transmit the first DCI.

11. A base station (202) in a communication system, the base station (202) comprising:

a transceiver; and
a processor coupled with the transceiver and configured to:

transmit a first discontinuous reception, DRX, configuration, a second DRX configuration and a configuration to monitor downlink control information, DCI, corresponding to a wake up signal, WUS, wherein the first DRX configuration is used for both unicast transmission and point-to-point, PTP, transmission associated with multicast broadcast service, MBS, and the second DRX configuration is used for point-to-multipoint, PTM, transmission associated with the MBS;
identify whether to transmit first DCI for the PTP transmission on a first DRX on-duration of the first DRX configuration, wherein the first DCI is addressed to a cell-radio network temporary identifier, C-RNTI;
transmit the DCI corresponding to the WUS, wherein the DCI corresponding to the WUS indicates to monitor the first DCI in case of identifying to transmit the first DCI;
transmit the first DCI on the first DRX on-duration in case of identifying to transmit the first DCI; and
transmit second DCI for the PTM transmission on a second DRX on-duration of the second DRX configuration, wherein the second DCI is addressed to a group-radio network temporary identifier, G-RNTI.

12. The base station of claim 11, wherein the processor is further configured to perform the method according to any one of claims 9 to 10.

**Patentansprüche**

1. Verfahren, das durch ein Benutzergerät, UE, (204) in einem Kommunikationssystem durchgeführt wird, wobei das Verfahren Folgendes umfasst:

Empfangen einer ersten Konfiguration für diskontinuierlichen Empfang, DRX, einer zweiten DRX-Konfiguration und einer Konfiguration zum Überwachen von Downlink-Steuerinformationen, DCI, die einem Wecksignal, WUS, entsprechen, wobei die erste DRX-Konfiguration sowohl für Unicast-Übertragungen als auch für Punkt-zu-Punkt-, PTP, - Übertragungen verwendet wird, die mit einem Multicast-Broadcast-Dienst, MBS, assoziiert sind, und die zweite DRX-Konfiguration für Punkt-zu-Mehrpunkt-, PTM, -Übertragungen verwendet wird, die mit dem MBS assoziiert sind;
Empfangen, basierend auf der Konfiguration, der DCI, die dem WUS entsprechen;
Identifizieren, basierend auf den DCI, die dem WUS entsprechen, ob die ersten DCI für die PTP-Übertragung während einer ersten DRX-Betriebsdauer der ersten DRX-Konfiguration überwacht werden sollen, wobei die ersten DCI an eine temporäre Zellenfunknetzwerkkennung, C-RNTI, adressiert sind;
Überwachen der ersten DCI während der ersten DRX-Betriebsdauer, falls identifiziert wird, dass die ersten DCI überwacht werden sollen; und
Überwachen zweiter DCI für die PTM-Übertragung während einer zweiten DRX-Betriebsdauer der zweiten DRX-Konfiguration, wobei die zweiten DCI an eine temporäre Gruppenfunknetzwerkkennung, G-RNTI, adressiert sind.

2. Verfahren nach Anspruch 1, wobei die zweiten DCI während der zweiten DRX-Betriebsdauer unabhängig von den DCI, die dem WUS entsprechen, überwacht werden.

3. Verfahren nach Anspruch 1, ferner umfassend:
Überspringen des Überwachens der ersten DCI während der ersten DRX-Betriebsdauer, falls identifiziert wird, dass die ersten DCI nicht überwacht werden sollen.

4. Verfahren nach Anspruch 1, ferner umfassend:
Identifizieren, dass ein messungsbezogener Vorgang, der mit einem Kanalzustandsinformationsreferenzsignal, CSI-RS, assoziiert ist, nicht durchgeführt werden soll, basierend auf der Konfiguration und darauf, dass keine DRX-Aktivzeit vorliegt.

5. Verfahren nach Anspruch 1, wobei die erste DRX-Betriebsdauer basierend auf der ersten DRX-Konfiguration und einem Versatz von den DCI, die dem WUS entsprechen, identifiziert wird.

6. Benutzergerät, UE (204), in einem Kommunikationssystem, wobei das UE (204) Folgendes umfasst:

einen Sendeempfänger; und
einen Prozessor, der mit dem Sendeempfänger gekoppelt ist und konfiguriert ist zum:

Empfangen einer ersten Konfiguration für diskontinuierlichen Empfang, DRX, einer zweiten DRX-Konfiguration und einer Konfiguration zum Überwachen von Downlink-Steuerinformationen, DCI, die einem Wecksignal, WUS, entsprechen, wobei die erste DRX-Konfiguration sowohl für Unicast-Übertragungen als auch für Punkt-zu-Punkt-, PTP, - Übertragungen verwendet wird, die mit einem Multicast-Broadcast-Dienst, MBS, assoziiert sind, und die zweite DRX-Konfiguration für Punkt-zu-Mehrpunkt-, PTM, -Übertragungen verwendet wird, die mit dem MBS assoziiert sind;
Empfangen, basierend auf der Konfiguration, der DCI, die dem WUS entsprechen;
Identifizieren, basierend auf den DCI, die dem WUS entsprechen, ob die ersten DCI für die PTP-Übertragung während einer ersten DRX-Betriebsdauer der ersten DRX-Konfiguration überwacht werden sollen, wobei die ersten DCI an eine temporäre Zellenfunknetzwerkkennung, C-RNTI, adressiert sind;
Überwachen der ersten DCI während der ersten DRX-Betriebsdauer, falls identifiziert wird, dass die ersten DCI überwacht werden sollen; und
Überwachen zweiter DCI für die PTM-Übertragung während einer zweiten DRX-Betriebsdauer der zweiten DRX-Konfiguration, wobei die zweiten DCI an eine temporäre Gruppenfunknetzwerkkennung, G-RNTI, adressiert sind.

7. UE (204) nach Anspruch 6, wobei der Prozessor so konfiguriert ist, dass er das Verfahren nach einem der Ansprüche 2 bis 5 durchführt.

8. Verfahren, das durch eine Basisstation (202) in einem Kommunikationssystem durchgeführt wird, wobei das Verfahren Folgendes umfasst:

Übertragen einer ersten Konfiguration für diskontinuierlichen Empfang, DRX, einer zweiten DRX-Konfiguration und einer Konfiguration zum Überwachen von Downlink-Steuerinformationen, DCI, die einem Wecksignal, WUS, entsprechen, wobei die erste DRX-Konfiguration sowohl für Unicast-Übertragungen als auch für Punkt-zu-Punkt-, PTP, - Übertragungen verwendet wird, die mit einem Multicast-Broadcast-Dienst, MBS, assoziiert sind, und die zweite DRX-Konfiguration für Punkt-zu-Mehrpunkt-, PTM, -Übertragungen verwendet wird, die mit dem MBS assoziiert sind;
Identifizieren, ob die ersten DCI für die PTP-Übertragung während einer ersten DRX-Betriebsdauer der ersten DRX-Konfiguration übertragen werden sollen, wobei die ersten DCI an eine temporäre Zellenfunknetzwerkkennung, C-RNTI, adressiert sind;
Übertragen der DCI, die dem WUS entsprechen, wobei die DCI, die dem WUS entsprechen, angeben, dass die ersten DCI überwacht werden sollen, falls identifiziert wird, dass die ersten DCI übertragen werden sollen;
Übertragen der ersten DCI während der ersten DRX-Betriebsdauer, falls identifiziert wird, dass die ersten DCI übertragen werden sollen; und
Übertragen zweiter DCI für die PTM-Übertragung während einer zweiten DRX-Betriebsdauer der zweiten DRX-Konfiguration, wobei die zweiten DCI an eine temporäre Gruppenfunknetzwerkkennung, G-RNTI, adressiert sind.

**9.** Verfahren nach Anspruch 8, wobei die zweiten DCI während der zweiten DRX-Betriebsdauer unabhängig von den DCI, die dem WUS entsprechen, übertragen wird werden.

**10.** Verfahren nach Anspruch 9, ferner umfassend:

Überspringen des Übertragens der ersten DCI während der ersten DRX-Betriebsdauer, falls identifiziert wird, dass die ersten DCI nicht übertragen werden sollen,
wobei die DCI, die dem WUS entsprechen, angeben, dass die ersten DCI nicht überwacht werden sollen, falls identifiziert wird, dass die ersten DCI nicht übertragen werden sollen.

**11.** Basisstation (202) in einem Kommunikationssystem, wobei die Basisstation (202) Folgendes umfasst:

einen Sendeempfänger; und
einen Prozessor, der mit dem Sendeempfänger gekoppelt ist und konfiguriert ist zum:

Übertragen einer ersten Konfiguration für diskontinuierlichen Empfang, DRX, einer zweiten DRX-Konfiguration und einer Konfiguration zum Überwachen von Downlink-Steuerinformationen, DCI, die einem Wecksignal, WUS, entsprechen, wobei die erste DRX-Konfiguration sowohl für Unicast-Übertragungen als auch für Punkt-zu-Punkt-, PTP, - Übertragungen verwendet wird, die mit einem Multicast-Broadcast-Dienst, MBS, assoziiert sind, und die zweite DRX-Konfiguration für Punkt-zu-Mehrpunkt-, PTM, -Übertragungen verwendet wird, die mit dem MBS assoziiert sind;
Identifizieren, ob die ersten DCI für die PTP-Übertragung während einer ersten DRX-Betriebsdauer der ersten DRX-Konfiguration übertragen werden sollen, wobei die ersten DCI an eine temporäre Zellenfunknetzwerkkennung, C-RNTI, adressiert sind;
Übertragen der DCI, die dem WUS entsprechen, wobei die DCI, die dem WUS entsprechen, angeben, dass die ersten DCI überwacht werden sollen, falls identifiziert wird, dass die ersten DCI übertragen werden sollen;
Übertragen der ersten DCI während der ersten DRX-Betriebsdauer, falls identifiziert wird, dass die ersten DCI übertragen werden sollen; und
Übertragen zweiter DCI für die PTM-Übertragung während einer zweiten DRX-Betriebsdauer der zweiten DRX-Konfiguration, wobei die zweiten DCI an eine temporäre Gruppenfunknetzwerkkennung, G-RNTI, adressiert sind.

**12.** Basisstation nach Anspruch 11, wobei der Prozessor ferner so konfiguriert ist, dass er das Verfahren nach einem der Ansprüche 9 bis 10 durchführt.

**Revendications**

**1.** Procédé exécuté par un équipement utilisateur, UE, (204) dans un système de communication, le procédé comprenant :

recevoir une première configuration de réception discontinue, DRX, une deuxième configuration DRX et une configuration pour surveiller des informations de commande de liaison descendante, DCI, correspondant à un signal de réveil, WUS, la première configuration DRX étant utilisée pour la transmission unicast et la transmission point à point, PTP, associées au service de diffusion multicast, MBS, et la deuxième configuration DRX est utilisée pour la transmission point à multipoint, PTM, associée au service de diffusion multicast, MBS ;
recevoir, en se basant sur la configuration, les DCI correspondant au WUS ;
identifier, en se basant sur les DCI correspondant au WUS, s'il faut surveiller des premières DCI pour la transmission PTP sur une première durée d'activation de DRX de la première configuration DRX, les premières DCI étant adressées à un identifiant temporaire de réseau radio cellulaire, C-RNTI ;
surveiller les premières DCI pendant la première durée d'activation de DRX en cas d'identification du fait de surveiller les premières DCI ; et
surveiller des deuxièmes DCI pour la transmission PTM sur une deuxième durée d'activation de DRX de la deuxième configuration DRX, dans lequel les deuxièmes DCI sont adressées à un identifiant temporaire de réseau radio de groupe, G-RNTI.

2. Procédé de la revendication 1, dans lequel les deuxièmes DCI sont surveillées sur la deuxième durée d'activation de DRX indépendamment des DCI correspondant au WUS.

3. Procédé de la revendication 1, comprenant en outre :
sauter la surveillance des premières DCI pendant la première durée d'activation de DRX en cas d'identification du fait de ne pas surveiller les premières DCI.

4. Procédé de la revendication 1, comprenant en outre :
identifier le fait de ne pas effectuer une opération liée à une mesure associée à un signal de référence d'informations d'état de canal, CSI-RS, en se basant sur la configuration et en n'étant pas dans un temps d'activité de DRX.

5. Procédé de la revendication 1, dans lequel la première durée d'activation de DRX est identifiée en se basant sur la première configuration du DRX et un décalage par rapport aux DCI correspondant au WUS.

6. Équipement utilisateur, UE (204), dans un système de communication, l'UE (204) comprenant :

un émetteur-récepteur ; et
un processeur couplé à l'émetteur-récepteur et configurée pour :

recevoir une première configuration de réception discontinue, DRX, une deuxième configuration DRX et une configuration pour surveiller des informations de commande de liaison descendante, DCI, correspondant à un signal de réveil, WUS, la première configuration DRX étant utilisée pour la transmission unicast et la transmission point à point, PTP, associées au service de diffusion multicast, MBS, et la deuxième configuration DRX est utilisée pour la transmission point à multipoint, PTM, associée au service de diffusion multicast, MBS ;
recevoir, en se basant sur la configuration, les DCI correspondant au WUS ;
identifier, en se basant sur les DCI correspondant au WUS, s'il faut surveiller les premières DCI pour la transmission PTP sur une première durée d'activation de DRX de la première configuration DRX, les premières DCI étant adressées à un identifiant temporaire de réseau radio cellulaire, C-RNTI ;
surveiller les premières DCI pendant la première durée d'activation de DRX en cas d'identification du fait de surveiller les premières DCI ; et
surveiller des deuxièmes DCI pour la transmission PTM sur une deuxième durée d'activation de DRX de la deuxième configuration DRX, dans lequel les deuxièmes DCI sont adressées à un identifiant temporaire de réseau radio de groupe, G-RNTI.

7. UE (204) de la revendication 6, dans lequel le processeur est configuré pour exécuter le procédé selon l'une quelconque des revendications 2 à 5.

8. Procédé exécuté par une station de base (202) dans un système de communicateur, le procédé comprenant :

transmettre une première configuration de réception discontinue, DRX, une deuxième configuration DRX et une configuration pour surveiller des informations de commande de liaison descendante, DCI, correspondant à un signal de réveil, WUS, la première configuration DRX étant utilisée pour la transmission unicast et la transmission point à point, PTP, associées au service de diffusion multicast, MBS, et la deuxième configuration DRX est utilisée pour la transmission point à multipoint, PTM, associée au service de diffusion multicast, MBS ;
identifier s'il faut transmettre des premières DCI pour la transmission PTP lors d'une première durée d'activation de la première configuration DRX, les premières DCI étant adressées à un identifiant temporaire de réseau cellulaire-radio, C-RNTI ;
transmettre les DCI correspondant au WUS, dans lequel les DCI correspondant au WUS indiquent de surveiller les premières DCI en cas d'identification du fait de transmettre les premières DCI :;;
transmettre les premières DCI sur la première durée d'activation de DRX en cas d'identification du fait de transmettre les premières DCI ; et
transmettre des deuxièmes DCI pour la transmission PTM sur une deuxième durée d'activation de DRX de la deuxième configuration DRX, dans lequel les deuxièmes DCI sont adressées à un identifiant temporaire de réseau radio de groupe, G-RNTI.

**9.** Procédé de la revendication 8, dans lequel les deuxièmes DCI sont transmises sur la deuxième durée d'activation de DRX indépendamment des DCI correspondant au WUS.

**10.** Procédé de la revendication 9, comprenant en outre :

sauter la transmission des premières DCI pendant la première durée d'activation de DRX en cas d'identification de ne pas transmettre les premières DCI,
dans lequel les DCI correspondant au WUS indiquent de ne pas surveiller les premières DCI en cas d'identification du fait de ne pas transmettre les premières DCI.

**11.** Station de base (202) dans un système de communication, la station de base (202) comprenant :

un émetteur-récepteur ; et
un processeur couplé à l'émetteur-récepteur et configurée pour :

transmettre une première configuration de réception discontinue, DRX, une deuxième configuration DRX et une configuration pour surveiller des informations de commande de liaison descendante, DCI, correspondant à un signal de réveil, WUS, la première configuration DRX étant utilisée pour la transmission unicast et la transmission point à point, PTP, associées au service de diffusion multicast, MBS, et la deuxième configuration DRX est utilisée pour la transmission point à multipoint, PTM, associée au service de diffusion multicast, MBS ;
identifier s'il faut transmettre des premières DCI pour la transmission PTP lors d'une première durée d'activation de la première configuration DRX, les premières DCI étant adressées à un identifiant temporaire de réseau cellulaire-radio, C-RNTI ;
transmettre les DCI correspondant au WUS, dans laquelle les DCI correspondant au WUS indiquent de surveiller les premières DCI en cas d'identification du fait de transmettre les premières DCI ;
transmettre les premières DCI sur la première durée d'activation de DRX en cas d'identification du fait de transmettre les premières DCI ; et
transmettre des deuxièmes DCI pour la transmission PTM sur une deuxième durée d'activation de DRX pendant la durée de la deuxième configuration DRX, dans laquelle les deuxièmes DCI sont adressées à un identifiant temporaire de réseau radio de groupe, G-RNTI.

**12.** Station de base de la revendication 11, dans laquelle le processeur est en outre configuré pour exécuter le procédé selon l'une quelconque des revendications 9 à 10.

[Fig. 1a]

**PTP MRB
(LegacyDRB)**

| |
|---|
| SDAP |
| PDCP |

| |
|---|
| RLC |

C-RNTI

| |
|---|
| MAC |

[Fig. 1b]

**PTM MRB
(MRB)**

| |
|---|
| SDAP |
| PDCP |

| |
|---|
| RLC-PTM |

G-RNTI

| |
|---|
| MAC |

[Fig. 1c]

**Common PDCP (MRB)**

| SDAP |
| PDCP |

RLC-PTM — G-RNTI

RLC-PTP — C-RNTI

MAC

[Fig. 2]

[Fig. 3a]

Unicast BWP X

MBS BWP / Freq
Resource Y

[Fig. 3b]

Unicast BWP X

MBS BWP / Freq
Resource Y

[Fig. 3c]

Unicast BWP X

MBS BWP / Freq
Resource Y

[Fig. 3d]

MBS BWP / Freq
Resource Y

Unicast BWP X

[Fig. 3e]

[Fig. 3f]

MBS Z

Unicast BWP X

[Fig. 3g]

Unicast BWP X

MBS sub BWP Y1

MBS sub BWP Y2

MBS sub BWP Y3

[Fig. 3h]

MBS UL BWP Y'

Unicast BWP X

MBS DL BWP Y

[Fig. 4]

204

402 — Memory

404 — Interface

406 — Processing circuitry

UE

[Fig. 5]

202

| | |
|---|---|
| 502 — **Memory** | **Interface** — 504 |
| 506 — **Processing circuitry** | **BN/Network/gNB** |

[Fig. 6]

600

Align a paging occasion (PO) of paging reception to match awake periods of a paging Discontinuous (DRX) cycle with awake periods of a DRX configuration intended for reception of the MBS services, if a current mode of the UE is a idle/inactive mode — 602a

Receive a Wake-Up Signal (WUS) from a network indicating a presence or absence of allocations for the UE to receive the MBS services in at least one MBS service DRX cycle, if the current mode of the UE is a connected mode — 602b

Manage a DRX cycle using the PO alignment or the WUS depending on the current mode of the UE to receive the MBS services, wherein the UE supports reception of at least one of, unicast services and the MBS services simultaneously on a unicast Bandwidth Part (BWP) and an MBS BWP or a common frequency resource (CFR), based on the current mode of the UE, wherein an MBS service uses at least one of, a Point-to-Point (PTP) delivery mode and a Point-to-Multipoint (PTM) delivery mode; wherein a DRX configuration for receiving the MBS service during the PTP delivery mode is based on a unicast DRX configuration and the DRX configuration for receiving the MBS services during the PTM delivery mode is based on an MBS service DRX configuration — 604

[Fig. 7]

700

```
┌─────────────────────────────────────────────────────────┐
│  Determine that a current PO is not suitable for the     │
│  reduced power consumption in conjunction with an MBS    │──── 702
│  service scheduling or an MBS service DRX configuration  │
└─────────────────────────────────────────────────────────┘
                          │
                          ▼
┌─────────────────────────────────────────────────────────┐
│  Determine an alternative UE_ID or an offset that        │
│  provides for a closeby PO for paging and MBS reception  │
│  occasions, wherein the closeby PO is placed in a time   │──── 704
│  domain near to the MBS reception occasions              │
└─────────────────────────────────────────────────────────┘
                          │
                          ▼
┌─────────────────────────────────────────────────────────┐
│  Initiate a GUTI reassignment procedure with a network,  │
│  on determining that the current PO is not suitable for  │──── 706
│  the reduced power consumption                           │
└─────────────────────────────────────────────────────────┘
                          │
                          ▼
┌─────────────────────────────────────────────────────────┐
│  Receive a new GUTI from the network in response to the  │
│  initiated GUTI reassignment procedure, wherein the new  │──── 708
│  GUTI includes a new UE identifier (UE_ID) reallocated   │
│  by the network for the UE                               │
└─────────────────────────────────────────────────────────┘
                          │
                          ▼
┌─────────────────────────────────────────────────────────┐
│  Alter a paging reception operation with utilizing a new │
│  PO in accordance with the received new UE_ID in the     │──── 710
│  new GUTI                                                │
└─────────────────────────────────────────────────────────┘
```

[Fig. 8]

800

```
┌─────────────────────────────────────────────────────────┐
│   Send MBS assistance information to the network in the NAS or a      │
│   Radio Resource Control (RRC) signalling for at least one of, a preferred PO,  │──── 802
│   a DRX configuration of the MBS services, or scheduling and DRX     │
│   configuration information for the MBS services            │
└─────────────────────────────────────────────────────────┘
```

```
┌─────────────────────────────────────────────────────────┐
│   Receive the new PO or the new UE_ID in the NAS signalling or       │
│   the RRC signalling from the network in response to the sent MBS     │
│   assistance information, wherein the new PO or the new UE_ID        │──── 804
│   carry an alignment between a paging DRX and an MBS service DRX    │
└─────────────────────────────────────────────────────────┘
```

```
┌─────────────────────────────────────────────────────────┐
│   Alter the paging reception operation with the new PO in          │
│   accordance with the new UE_ID                       │──── 806
└─────────────────────────────────────────────────────────┘
```

[Fig. 9]

900

```
┌─────────────────────────────────────────────────────────┐
│   Compute an offset value to a current PO to make an alignment        │
│   between the paging DRX and the MBS service DRX             │──── 902
└─────────────────────────────────────────────────────────┘
```

```
┌─────────────────────────────────────────────────────────┐
│   Perform a first action, or a second action based on the computed     │
│   offset value, wherein the first action includes sending the computed   │
│   offset value to the network in one of, the NAS signalling,         │
│   the RRC signalling, or a Medium Access Control (MAC) signalling and   │
│   receiving the new PO or the new UE_ID, or a paging configuration     │──── 904
│   message from the network and altering the paging reception operation  │
│   with the new PO in accordance with the new UE_ID, wherein the      │
│   second action includes aligning the PO by applying the computed    │
│   offset value to the current PO                         │
└─────────────────────────────────────────────────────────┘
```

[Fig. 10]

1000

Receive the WUS from the network in a Downlink Control Information (DCI) at an offset to a DRX ON-duration start indicating the presence or absence of the allocations for the MBS services for the UE on the unicast BWP — 1002

Wake up in the DRX ON-duration to receive DCI allocations on a Physical Downlink Control Channel (PDCCH) addressed to the at least one of, the G-RNTI, the G-CS-RNTI or a Cell-RNTI (C-RNTI) during the DRX ON-duration, if the presence of the allocations for the MBS services is indicated in the WUS the MBS services for the UE on the unicast BWP — 1004

Remain in sleep in the DRX ON-duration or skipping monitoring of the DCI allocations on the PDCCH addressed to the at least one of G-RNTI, the G-CS-RNTI or the C-RNTI during the DRX ON-duration, if the absence of the allocations for the MBS services is indicated in the WUS — 804

[Fig. 11]

1100

Receive the WUS from the network in the DCI at the offset to
the DRX ON-duration start indicating the presence or absence of
the allocations for at least one of the MBS services and
unicast services for the UE on the unicast BWP

~1102

Wake up in the DRX ON-duration to receive MBS DCI allocations on
the PDCCH addressed to at least one of the G-RNTI, G-CS-RNTI and
the C-RNTI and unicast DCI allocations on the PDCCH addressed to
the C-RNTI during the DRX ON-duration, if the presence of
the allocations for at least one of, the MBS services and
the unicast services is indicated in the WUS

~1104

Remain in sleep in the DRX ON-duration or skipping monitoring of
MBS DCI allocations on the PDCCH addressed to at least one of
the G-RNTI, G-CS-RNTI and the C-RNTI and unicast DCI allocations on
the PDCCH addressed to the C-RNTI, during the DRX ON-duration,
if the absence of the allocations for at least one of,
the MBS services and the unicast services is indicated in the WUS

~1106

[Fig. 12]

1200

```
┌─────────────────────────────────────────────────────┐
│   Receive the WUS from the network in the DCI at the offset to
│   the DRX ON-duration start indicating the presence or absence of
│   the allocations for the unicast services for the UE on the unicast    ~ 1202
│   BWP except for the MBS services being received on the MBS BWP or CFR
│   associated with the unicast BWP
└─────────────────────────────────────────────────────┘
                          │
                          ▼
┌─────────────────────────────────────────────────────┐
│   Wake up in the DRX ON-duration to receive the MBS DCI allocations on
│   the PDCCH addressed to at least one of, the G-RNTI, the G-CS-RNTI or
│   the C-RNTI and the unicast DCI allocations on the PDCCH addressed to   ~ 1204
│   the C-RNTI during the DRX ON-duration, if the presence of
│   the allocations for the unicast services on the unicast BWP is
│   indicated in the WUS
└─────────────────────────────────────────────────────┘
                          │
                          ▼
┌─────────────────────────────────────────────────────┐
│   Continue monitoring of the MBS DCI allocations on
│   the PDCCH addressed to at least one of the G-RNTI, the G-CS-RNTI or
│   the C-RNTI and skipping monitoring of the unicast DCI allocations on
│   the PDCCH addressed to the C-RNTI, during the DRX ON-duration,         ~ 1206
│   if the absence of the allocations for the unicast services on
│   the unicast BWP is indicated in the WUS
└─────────────────────────────────────────────────────┘
```

[Fig. 13]

1300

Receive the WUS from the network in the DCI at the offset to the DRX ON-duration start indicating the presence or absence of the allocations for at least one of, the unicast services and the MBS services for the UE on the unicast BWP and the MBS services for the UE on the MBS BWP or CFR associated to the unicast BWP

~1302

Wake up in the DRX ON-duration to receive the MBS DCI allocations on the PDCCH addressed to at least one of the G-RNTI, the G-CS-RNTI or the C-RNTI on the unicast BWP or the MBS BWP/CFR and the unicast DCI allocations on the PDCCH addressed to the C-RNTI on the unicast BWP, during the DRX ON-duration, if the presence of the allocations for the unicast services and the MBS services on the unicast BWP and for the MBS services on the MBS BWP/CFR is indicated in the WUS

~1304

Skip monitoring of the MBS DCI allocations on the PDCCH addressed to at least one of the G-RNTI, the G-CS-RNTI or the C-RNTI on the unicast BWP or the MBS BWP/CFR and skipping monitoring of the unicast DCI allocations on the PDCCH addressed to the C-RNTI on the unicast BWP, during the DRX ON-duration, if the absence of the allocations for the the unicast services and the MBS services on the unicast BWP and for the MBS services on the MBS BWP/CFR is indicated in the WUS

~1306

[Fig. 14]

1400

Determine that the UE is configured to monitor the DCI for receiving the WUS

~1402

Perform the MBS measurements on the unicast BWP at least one of during the active time and during a timer duration indicated by a DRX ON-duration timer outside the active time based on at least one of a Channel State Information-Reference Signal (CSI-RS) reference signal, a Demodulation reference signal (DMRS) and a common reference signal (RS) (MBS RS) reference signal configuration

~1404

[Fig. 15]

1500

Perform the MBS measurements on the MBS BWP/CFR associated with the unicast BWP at least one of during the active time and during the timer duration indicated by the DRX ON-duration timer outside the active time based at least one of, the CSI-RS reference signal configuration, a Demodulation Reference Signal (DMRS) reference signal configuration, and the MBS RS reference signal configuration for the MBS BWP/CFR — 1502

Skip the MBS measurements on the MBS BWP/CFR associated with the unicast BWP other than at least one of during the active time and during the timer duration indicated by the DRX ON-duration timer outside the active time, based on at least one of, the CSI-RS, DMRS, and MBS RS reference signal configurations of the MBS BWP/CFR — 1504

[Fig. 16]

1600

Perform measurements of CSI-RS resources in the unicast BWP during the active time of the unicast DRX configuration — 1602

Perform measurements of the at least one of CSI-RS resources, DMRS resources, and MBS RS resources in the MBS BWP/CFR during the active time of the unicast DRX configuration applicable for the UE to receive the specific MBS services on the MBS BWP/CFR — 1604

[Fig. 17]

1700

Expect the CSI-RS resources available during the active time of the unicast DRX configuration and performing the measurements based on the CSI-RS resource configuration for the unicast BWP — 1702

Expect the at least one of CSI-RS resources, the DMRS resources, and the MBS RS resources on the MBS BWP, or CFR and performing the measurements during the active time of the MBS DRX configuration applicable for the UE to receive the specific MBS services in the MBS BWP/CFR — 1704

[Fig. 18]

1800

Expect at least one of CSI-RS resources, the DMRS resources, and the MBS RS resources for measurements on the MBS BWP or CFR during an inactive time of the MBS service DRX cycle, when at least one of the unicast DRX cycle is equal to or lesser than a pre-defined duration and the MBS service DRX cycle is equal to or lesser than the pre-defined duration — 1802

Expect at least one of CSI-RS resources, the DMRS resources, and the MBS RS resources for measurements on the MBS BWP or the CFR during the active time of the MBS service DRX cycle, when at least one of the unicast DRX cycle is greater than the pre-defined duration and the MBS service DRX cycle is greater than the pre-defined duration — 1804

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020200075 A1

**Non-patent literature cited in the description**

- Discussion on group-based scheduling for MBS. 3GPP technical document R2-2008874